# EUROPÄISCHE PATENTSCHRIFT

(11) **EP 4 230 381 B1**
(45) Veröffentlichungstag und Bekanntmachung des Hinweises auf die Patenterteilung: **29.10.2025**
(21) Anmeldenummer: 22198641.7
(22) Anmeldetag: 29.09.2022
(51) Int. Cl.: B29C 49/64, B29C 49/36

(54) **HEIZVERFAHREN UND HEIZVORRICHTUNG ZUR THERMISCHEN KONDITIONIERUNG VON VORFORMLINGEN MIT TEMPERATURAUSGEZEICHNETEN UMFANGSBEREICHEN**
HEATING METHOD AND HEATING DEVICE FOR THERMAL CONDITIONING OF PREFORMS WITH TEMPERATURE-DIFFERENTIATED PERIPHERAL AREAS
PROCÉDÉ DE CHAUFFAGE ET DISPOSITIF DE CHAUFFAGE POUR LE CONDITIONNEMENT THERMIQUE DE PRÉFORMES AVEC DES ZONES PÉRIPHÉRIQUES MARQUÉES PAR LA TEMPÉRATURE

(30) Priorität: 04.01.2022 DE 102022100090
(43) Veröffentlichungstag der Anmeldung: 23.08.2023
(73) Patentinhaber: KHS GmbH, 44143 Dortmund (DE)
(72) Erfinder: Klöpper, Gerhard, 22391 Hamburg (DE); Baumgarte, Rolf, 22926 Ahrensburg (DE); Linke, Michael, 22159 Hamburg (DE); Litzenberg, Michael, 21039 Börnsen (DE); Gerhards, Martin, 22089 Hamburg (DE)
(74) Vertreter: Eisenführ Speiser

(56) Entgegenhaltungen:
- EP-A2- 0 920 974
- DE-A1- 102014 118 292
- US-A1- 2019 091 918

## Beschreibung

Die Erfindung betrifft ein Heizverfahren zur thermischen Konditionierung von Vorformlingen, die für eine Umformung vorgesehen sind, nach dem Oberbegriff des Anspruchs 1.

Die Erfindung betrifft weiterhin eine Heizvorrichtung zur thermischen Konditionierung von Vorformlingen, die für eine Umformung vorgesehen sind, nach dem Oberbegriff des Anspruchs 5 und eine Behälterherstellungsmaschine nach Anspruch 15 mit einer solchen Heizvorrichtung.

Die Erfindung beschreibt schließlich Zwangsführungseinrichtungen zur Verwendung in einer Heizvorrichtung für Vorformlinge.

Generell geht es um das Gebiet des Preferential Heating, also um die ungleichmäßige Temperierung von Vorformlingen in deren Umfangsrichtung. Eine derartige ungleichmäßige Temperierung mit stärker erwärmten Umfangsbereichen und mit weniger stark erwärmten Umfangsbereichen wird beispielsweise angewendet, wenn aus den Vorformlingen Behälter hergestellt werden sollen, deren Querschnitt von einer kreisrunden Form abweicht. Die Abweichung kann beispielsweise darin bestehen, dass Behälter mit ovalem Querschnitt oder beispielsweise mit dreieckigem oder viereckigem Querschnitt produziert werden sollen.

Solche Temperierungen sind erforderlich, um Vorformlinge aus einem thermoplastischen Material auf einen nachfolgenden Umformvorgang vorzubereiten, nämlich das thermoplastische Vorformlingsmaterial auf eine Temperatur zu bringen, die eine Umformung erlaubt. Bekannt ist einerseits, dass diese Umformung unter Verwendung eines Blasgases erfolgt. Bekannt ist auch, dass eine simultane Umformung und Befüllung erfolgt, indem das Füllgut als flüssiges Umformfluid unter einem Umformdruck in den zuvor temperierten Vorformling eingeleitet wird. Bezüglich der Temperierung besteht kein grundsätzlicher Unterschied zwischen beiden Umformprozessen, sodass nachfolgend stellvertretend für alle Umformprozesse auf Blasprozesse abgestellt wird, d. h. auf die Verwendung eines Blasgases, um den technischen Hintergrund der Erfindung zu erläutern, ohne dass darin aber eine Beschränkung der Allgemeinheit zu sehen ist, denn die Erfindung befasst sich mit der Temperierung der Vorformlinge und der Führung der Vorformlinge durch Heizvorrichtungen bzw. während der Temperierung, sodass es auf den sich daran anschließenden Umformvorgang bei der Erfindung nicht ankommt.

Bei einer Behälterformung z.B. durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizvorrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird z.B. in der DE 43 40 291 A erläutert.

Der grundsätzliche Aufbau einer Blasstation zur Behälterformung wird in der DE 42 12 583 A1 beschrieben. Möglichkeiten zur Temperierung der Vorformlinge werden z.B. in der DE 23 52 926 A1 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen. Eine Handhabung von Behältern unter Verwendung von Übergaberädern wird beispielsweise in der DE 199 06 438 A1 bei einer Anordnung des Übergaberades zwischen einem Blasrad und einer Ausgabestrecke beschrieben.

Im Hinblick auf die verwendeten Blasstationen sind unterschiedliche Ausführungsformen bekannt. Bei Blasstationen, die auf rotierenden Blasrädern angeordnet sind, ist eine buchartige Aufklappbarkeit der Formträger häufig anzutreffen. Es ist aber auch möglich, relativ zueinander verschiebliche oder andersartig geführte Formträger einzusetzen.

Ungeachtet der konkreten Ausgestaltung der Blasstation erfolgt die Herstellung der Behälter aus den Vorformlingen dadurch, dass die Vorformlinge nach ihrer Temperaturkonditionierung den Blasstationen zugeführt und übergeben werden, dass die Vorformlinge dabei in eine geöffnete Form eingesetzt und die Form anschließend geschlossen wird. Durch Beaufschlagen des Vorformlings mit einem Umformmedium unter Druck wird dieser gegen die umgebende äußere Form expandiert, häufig unter Verwendung einer Reckstange, die in Längsrichtung des Vorformlings in diesen hineinfährt und ihn in Längsrichtung reckt und führt.

Die Herstellung der eingangs erwähnten unrunden Behälter wird bereits in der US 3,775,524 beschrieben. Es erfolgt zunächst eine symmetrische Temperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden in der US 3,632,713, der US 3,950,459 sowie der US 3,892,830 beschrieben. Eine Temperaturkonditionierung durch selektive Abschattung wird in der DE 33 14 106 A1 angegeben. Die EP 2 428 347 A2 beschreibt eine selektive Temperaturprofilierung in Umfangsrichtung durch Berühren bestimmter Umfangsbereiche.

Aus der US 5,292,243 A ist es bekannt, gleichzeitig zwei Vorformlinge einer Temperaturkonditionierung in Umfangsrichtung zu unterziehen. In der EP 0 620 099 B1 und der inhaltsgleichen DE 694 01 024 T2 findet sich eine Zusammenstellung von aus dem Stand der Technik bekannten Verfahren zur Temperaturkonditionierung von Vorformlingen.

Weiterhin ist im Stand der Technik bekannt, einen Vorformling zunächst in einem ersten Heizungsabschnitt einer Heizvorrichtung in Umfangsrichtung homogen, das heißt gleichmäßig zu erwärmen, und anschließend in einem zweiten Heizungsabschnitt in Umfangsrichtung das gewünschte Temperaturprofil zu erzeugen. Einen solchen Stand der Technik zeigt die WO 97/32713 A1 mit einem schrittweise arbeitenden Rotationsantrieb für die Vorformlinge. Die US 5,853,775 offenbart zwei Heizungsabschnitte mit einer ebenfalls schrittweise umlaufenden Transportkette mit einer Vielzahl von Vorformlingen tragenden Kettengliedern in Form von Transportdornen. In einer ersten Heizstation erfolgt zunächst eine homogene Erwärmung der Vorformlinge und in einer der ersten Station gegenüberliegenden zweiten Heizstation erfolgt eine in Umfangsrichtung ungleichmäßige Erwärmung der Vorformlinge. In beiden Heizstationen werden die Vorformlinge mittels einer nur der jeweiligen Heizstation zugeordneten Kette gedreht.

Die DE 10 2007 016 027 A1 lehrt eine Vorrichtung für das Preferential Heating, bei der eine Drehbewegung der Vorformlinge von einem Profilstrang erzeugt wird, der mit einem Zahnrad der Trageinrichtung zusammenwirkt, die den Vorformling durch die Heizstrecke trägt und die gemeinsam mit weiteren Trageinrichtungen zu einer umlaufenden Kette verbunden ist. Der Profilstrang läuft beabstandet von der Kette um die Heizstrecke um und kämmt mit dem Zahnrad der Trageinrichtung. Dabei wird der Profilstrang, nämlich ein Zahnriemen, mit konstanter oder variierender Umlaufgeschwindigkeit angetrieben.

Die Erzeugung eines Temperaturprofils in Umfangsrichtung macht erforderlich, dass die Drehung der Vorformlinge während der Temperierung in einer geführten Weise erfolgt. Hierzu wird in aller Regel so vorgegangen, dass die Vorformlinge von Haltemitteln gehalten und durch die Heizstrecke geführt werden und diese Haltemittel dann in ihrer Drehorientierung zwangsgeführt werden. Drehung des Haltemittels führt zu einer identischen Drehung des Vorformlings. Für eine in Umfangsrichtung gleichmäßige Temperierung wird dabei regelmäßig so vorgegangen, dass das Haltemittel kontinuierlich in Drehung versetzt wird. Hierzu kann das Haltemittel z.B. über ein Zahnrad verfügen, das an einem Profilstrang, z.B. einem Zahnriemen, entlanggeführt wird. Aufgrund einer Relativgeschwindigkeit zwischen Zahnrad und Profilstrang wird eine zwangsgeführte Drehung des Haltemittels induziert. Für die Erzeugung eines Temperaturprofils in Umfangsrichtung kann dann z.B. das Haltemittel drehfest in einer Drehposition gehalten sein, wie dies z.B. in der WO 2017/178102 A1 erläutert ist. Es ist dort ein erster Umlaufbereich der zu einer Kette verbundenen Trageinrichtungen gezeigt, in dem die Zahnräder der Haltemittel der Trageinrichtungen mit einem Zahnriemen kämmen, wodurch die an den Haltemitteln gehaltenen Vorformlinge in diesem Bereich gleichmäßig um ihre Längsachse rotieren. In einem anderen Bereich werden die Haltemittel in einer bestimmten Drehpositionierung festgehalten, mithin auch die davon gehaltenen Vorformlinge, sodass bestimmte Umfangsbereiche eine stärkere Temperierung erfahren. Die EP 0 920 974 A2, US 2019 09198 A1 und die DE 10 2014 118 292 A1 offenbaren einen ähnlichen Stand der Technik.

Die gewünschte Erzeugung z.B. ovaler Behälter macht erforderlich, dass die in Umfangsrichtung mit einem Temperaturprofil versehenen Vorformlinge in einer gewünschten Ausrichtung in die Umformstationen übergeben werden. Die auf einer höheren Temperatur befindlichen Bereiche müssen in einer bestimmten Richtung weisend in der umgebenden Form angeordnet werden, damit der entstehende ovale Behälter die gewünschte Wanddickenverteilung und die gewünschten Behältereigenschaften aufweist. Es sind daher im Stand der Technik unterschiedliche Verfahren und Vorrichtungen bekannt, um Vorformlinge nach ihrer Temperierung auszurichten und in dieser ausgerichteten Weise den nachfolgenden Umformstationen zu übergeben.

Die bereits angesprochene WO 2017/178102 A1 beschreibt z.B., dass hierzu das Haltemittel der Trageinrichtung über einen einstellbaren Winkel entlang eines Umlenkrades der Kette festgehalten wird. Weitere Alternativen werden dort ebenfalls genannt. Die EP 2 253 452 A1 offenbart unterschiedliche Verfahren und Vorrichtungen, um eine Ausrichtung temperaturkonditionierter Vorformlinge zu erreichen. Auch die WO 2016/180510 A1 beschäftigt sich mit der Ausrichtung eines temperaturkonditionierten Vorformlings, bevor dieser in eine Umformstation übergeben wird.

Die gattungsbildende DE 197 57 818 A1 offenbart, dass Vorformlinge in Umfangsrichtung mit einem Temperaturprofil versehen werden. Dazu wird in einem ersten Bereich des Umlaufweges des Vorformlings durch eine Heizvorrichtung der Vorformling zu einer Rotationsbewegung angetrieben an Heizeinrichtungen entlanggeführt. In einem zweiten Bereich des Umlaufweges wird der Vorformling ohne eine solche Rotationsbewegung an Heizeinrichtungen entlanggeführt. Hierzu weist das Halteelement, das den Vorformling hält, einen Mitnehmer auf, der mit einer Steuerkurve zusammenwirkt, sodass der Vorformling ohne Rotationsbewegung geführt werden kann. Im ersten Bereich hingegen kämmt eine Verzahnung der kettenartig mit weiteren Trageinrichtungen verbundene Trageinrichtung mit einer Gegenverzahnung, sodass der Vorformling in eine Drehbewegung versetzt wird. Es wird bei diesem Stand der Technik als nachteilig empfunden, dass weiterhin eine Ausrichtung des Vorformlings vor der Übergabe in eine Umformstation erforderlich ist, um den Vorformling in einer gewünschten Orientierung in die Umformstation übergeben zu können.

Insgesamt finden sich im Stand der Technik eine Vielzahl von Lösungen, die aber allesamt noch nicht zu vollkommen zufriedenstellenden Verfahren oder Vorrichtungen für die thermische Konditionierung von Vorformlingen führen.

Es ist daher die Aufgabe der vorliegenden Erfindung, Heizverfahren und Heizvorrichtungen aufzuzeigen, die die bisherigen Probleme überwinden und die unter anderem überflüssig machen, vor der Übergabe des temperierten Vorformlings in eine Umformstation den Vorformling durch Ausrichtbewegungen oder Ausrichtmittel umorientieren zu müssen. Eine weitere Aufgabe der Erfindung besteht darin, entsprechende Einrichtungen zur Verfügung zu stellen, mit denen diese Aufgabe gelöst wird.

Die Lösung dieser Aufgabe gelingt mit einem Heizverfahren nach Anspruch 1. Erfindungsgemäß ist ein Heizverfahren zur thermischen Konditionierung von Vorformlingen, bei dem die Vorformlinge in grundsätzlich bekannter Weise in einer Förderrichtung durch eine Heizvorrichtung geführt werden. Heizvorrichtungen sind grundsätzlich vielfach im Stand der Technik bekannt und diese weist mehrere stationäre Heizeinrichtungen auf, die in der Förderrichtung hintereinanderliegend angeordnet sind. Diese Heizeinrichtungen können z.B. als sogenannte Heizkästen ausgeführt sein mit Infrarot-Strahlern auf der einen Seite der Vorformlinge und mit Reflektoren auf der gegenüberliegenden Seite der Vorformlinge. Das Führen der Vorformlinge entlang der Heizeinrichtungen erfolgt durch mehrere Trageinrichtungen, die miteinander verbunden werden zur Ausbildung einer Endlostransportkette, die angetrieben wird zu einem Umlauf innerhalb der Heizvorrichtung in Förderrichtung entlang einer Umlaufstrecke, um von den Trageinrichtungen gehaltene Vorformlinge zum Zwecke der thermischen Konditionierung entlang der Heizeinrichtungen zu transportieren. Während des regulären Heizverfahrens, also abseits von Störungen, erfolgt dieser Umlauf in einer kontinuierlichen Art und Weise, d. h. die Kette läuft mit einer bestimmten Geschwindigkeit kontinuierlich entlang der Umlaufstrecke und somit anders als in der DE 197 57 818 A1 beschrieben nicht schrittweise. Ein Vorformling durchläuft also im Normalbetrieb, d. h. außerhalb von ungeplanten Störungen, ohne Stillstandsphasen die Heizvorrichtung.

Die anspruchsgemäße Trageinrichtung soll mit einem Haltemittel für Vorformlinge versehen sein, das den Vorformling hält und das drehbar in der Trageinrichtung angeordnet wird für eine Drehung des Vorformlings um dessen Längsachse. Ein solches Haltemittel kann typischerweise z.B. als in die Vorformlingsmündung hineingreifender Haltedorn ausgeführt sein. Solche Haltedorne haben den Vorteil, dass die zu temperierenden Bereiche frei zugänglich sind und eine Übergabe auf diese Haltedorne zum Beispiel durch zangenartige Elemente erfolgen kann.

In einem Zuführbereich der Umlaufstrecke werden den Trageinrichtungen die zu temperierenden Vorformlinge zugeführt und von den Haltemitteln der Trageinrichtungen aufgenommen. In einem Entnahmebereich der Umlaufstrecke werden die temperaturkonditionierten Vorformlinge von den Haltemitteln der Trageinrichtungen abgenommen. Die Transporteinrichtungen laufen also zwischen dem Entnahmebereich und dem Zuführbereich in Förderrichtung vorformlingslos um und zwischen dem Zuführbereich und dem Entnahmebereich vorformlingshaltend um.

Während des vorformlingshaltenden Umlaufs sollen die Vorformlinge in zwei Streckenbereichen unterschiedlich an den Heizeinrichtungen entlanggeführt werden. In einem ersten Umlaufstreckenteilbereich soll dazu auf die Drehposition der Haltemittel von einem ersten form- und/oder kraftschlüssig angreifenden Zwangsführungsmittel eingewirkt werden. Dieses erste Zwangsführungsmittel soll die Haltemittel so zu einer kontinuierlichen Drehung antreiben, dass die Vorformlinge beim Führen entlang der Heizeinrichtungen in ihrer Umfangsrichtung gleichmäßig temperiert werden,
In einem zweiten Umlaufstreckenteilbereich soll auf die Drehposition der Haltemittel von einem zweiten form- und/oder kraftschlüssig angreifenden Zwangsführungsmittel eingewirkt werden. Das zweite Zwangsführungsmittel sollen die Drehposition der Haltemittel so zwangsführen, dass die Vorformlinge beim Führen entlang der Heizeinrichtungen in ihrer Umfangsrichtung ungleichmäßig temperiert werden (preferential heating).

Erfindungsgemäß sollen die ersten und zweiten Zwangsführungsmittel die Drehposition der Haltemittel mindestens so lange zwangsführen, wie die Haltemittel vorformlingshaltend umlaufen. Damit ist gemeint, dass spätestens ab dem Zeitpunkt der Übergabe der Vorformlinge auf die Haltemittel bis zu dem Zeitpunkt des Abnehmens der Vorformlinge von den Haltemitteln eine ununterbrochene Zwangsführung der Drehposition der Haltemittel erfolgt, sodass stets die Ausrichtung der Vorformlinge über die stets definierte Drehposition der Haltemittel bekannt und gewährleistet ist. Auf diese Weise ist nicht erforderlich, dass vor der Übergabe in eine Umformstation eine Ausrichtung der temperierten Vorformlinge erfolgen muss.

Bevorzugt wird die Drehposition der Haltemittel während des gesamten Umlaufs entlang der Umlaufstrecke zwangsgeführt, also auch während des vorformlingslosen Umlaufs. Damit laufen die Haltemittel in keinem Bereich frei von Zwangsmitteln um, d.h. ihre Drehorientierung ist immer definiert, da durch die Zwangsführungsmittel vorgegeben.

Für die erfindungsgemäße unterbrechungslose Festlegung der Drehorientierung der Haltemittel zumindest zu den Zeiten, zu denen diese Vorformlinge halten, können die Übergangsbereiche zwischen dem ersten und dem zweiten Zwangsführungsmittel kritisch sein. Es wird daher mit Vorteil vorgeschlagen, dass in einem Überlappbereich zwischen dem ersten und dem zweiten Zwangsführungsmittel beide Zwangsführungsmittel gleichzeitig auf die Drehposition der Haltemittel einwirken. In diesem Bereich liegt dann zwar eine Überbestimmung vor, es wird aber zuverlässig ein Bereich vermieden, indem keine Zwangsführung erfolgt. In einem konkreten Ausführungsbeispiel kann z.B. eines der Zwangsführungsmittel eine Führungsnut sein, die einen Führungsstift führt. Über die Breite der Führungsnut lässt sich eine Führungstoleranz einstellen und diese Breite der Führungsnut kann z.B. in dem besagten Überlappbereich gegenüber den anderen Umlaufbereichen etwas größer ausgeführt werden, damit ohne gegenseitige Störung oder Blockade beide Zwangsführungsmittel auf das Haltemittel einwirken können. Anderenfalls bzw. alternativ wäre erhöhter Aufwand bei der Justierung und Montage der Zwangsführungsmittel zu betreiben.

In einer bevorzugten Ausführungsvariante der Erfindung, die bezüglich Montageaufwand und Kosten als vorteilhaft angesehen wird, ist ein Mitnehmer am Haltemittel angeordnet und dieser wird entlang einer stationären Führungskurve geführt. Dabei ist eine beidseitige Führung des Mitnehmers eine weiter bevorzugt Untervariante, d. h. der Mitnehmer wird von beiden Seiten von einer Führungskurve in seiner Drehposition festgelegt. Dies lässt sich z.B. in bevorzugter Weise realisieren durch eine Führungsnut in einem Führungskörper, wobei der Mitnehmer dabei z.B. als Mitnehmerstift ausgeformt ist, der in die Führungsnut hereinragt. Alternativ ließe sich die Anordnung des Mitnehmers und der Führungskurve auch umkehren, d. h. das Haltemittel weist nicht den Mitnehmer bzw. den Mitnehmerstift auf, sondern eine Führungsfläche, die der Führungskurve entspricht, bzw. einen Führungsschlitz, der der Führungsnut entspricht, die mit stationär angeordneten Gegenflächen bzw. einer stationär angeordneten Führungsschiene zusammenwirkt. Diese alternativen Varianten werden aber als weniger vorteilhaft angesehen. Bei allen diesen genannten Ausführungsvarianten, aber auch unabhängig davon, wird als vorteilhaft angesehen, dass die ersten Zwangsführungsmittel mit einem Drehantriebskörper, typischerweise einem Zahnrad, am Haltemittel kämmen. Solche mit Zahnrädern kämmende Mittel sind im Stand der Technik grundsätzlich bekannt und sind z.B. als Zahnriemen oder Ketten ausgeführt.

Als gegenüber diesen genannten Zahnriemen oder Ketten bevorzugte Ausführungsform wird vorgeschlagen, dass die ersten Zwangsführungsmittel als mehrere in Förderrichtung hintereinander angeordnete Zahnstangen ausgeführt sind, die mit dem Zahnrad kämmen. Der Begriff "Zahnstange" ist technisch üblich und bekannt, und Zahnstangen sind im Stand der Technik in großer Variationsbreite bekannt. Ein Charakteristikum von Zahnstangen ist, dass diese eine Längserstreckung aufweisen und an ihren Längsseiten ein Zahnprofil aufweisen, in das Gegenverzahnungen, z.B. von Zahnrädern, eingreifen können. Zahnstangen sind in aller Regel dabei als starre Körper ausgeführt. Das Vorsehen mehrerer Zahnstangen ergibt den Vorteil einer Modularität und Anpassbarkeit. Insbesondere bei Anordnung der Zahnstangen mit teilweiser Überlappung in deren Längsrichtung kann z.B. eine Standardlänge verwendet werden, um jede gewünschte Länge des Bereiches abzudecken, in dem eine Drehung der Vorformlinge gewünscht ist, nämlich durch geeignete Wahl der Anzahl der Zahnstangen und der Überlapplänge. Gegenüber Zahnriemen erscheinen solche Zahnstangen vorzugswürdig, da bei einem Zahnriemen hohe Anforderungen an den Zahnriemenantrieb und an die Zahnriemenspannung gestellt würden, denn dieser Zahnriemen müsste eine phasengenaue und eine phasengeschwindigkeitsgenaue Übergabe ermöglichen im Übergang zu den zweiten Zwangsführungsmitteln.

Die Lösung der gestellten Aufgabe gelingt auch mit einer Heizvorrichtung mit den Merkmalen des Anspruchs 5. Analog zum vorstehend beschriebenen Verfahren ist eine Heizvorrichtung für die thermische Konditionierung von Vorformlingen erfindungsgemäß, durch die Vorformlinge zum Zwecke ihrer Temperaturkonditionierung in einer Förderrichtung geführt werden, wobei in der Heizvorrichtung mehrere Heizeinrichtungen stationär und in der Förderrichtung hintereinanderliegend angeordnet sind. Die Heizvorrichtung weist mehrere Trageinrichtungen für Vorformlinge auf, die miteinander verbunden sind zur Ausbildung einer Endlostransportkette, wobei die Endlostransportkette antreibbar ist, z.B. durch Verbindung mit einem Antriebsmotor, zu einem kontinuierlichen Umlauf innerhalb der Heizvorrichtung in Förderrichtung und entlang einer Umlaufstrecke. Bei diesem Umlauf entlang der Umlaufstrecke erfolgt das Führen der Vorformlinge entlang der Heizeinrichtungen, wobei jede Trageinrichtung ein Haltemittel für Vorformlinge aufweist, das ausgebildet ist für das Halten des Vorformlings, z.B. und bevorzugt ein Haltedorn, der in den Mündungsbereich des Vorformlings hineingreift und den Vorformling z.B. klemmend hält, Das Haltemittel ist drehbar in der Trageinrichtung angeordnet für eine Drehung des gehaltenen Vorformlings um dessen Längsachse. Die Heizvorrichtung weist einen Zuführbereich für Vorformlinge auf, in dem den Trageinrichtungen Vorformlinge zuführbar sind und in dem von den Haltemitteln Vorformlinge aufnehmbar sind und aufgenommen werden. Die Heizvorrichtung weist weiterhin einen Entnahmebereich auf, in dem die temperaturkonditionierten Vorformlinge von den Haltemitteln der Trageinrichtungen abnehmbar sind und abgenommen werden, sodass im Betrieb der Heizvorrichtung die Transporteinrichtungen mit ihren Haltemitteln zwischen dem Entnahmebereich und dem Zuführbereich ohne Vorformlinge, also vorformlingslos, und zwischen dem Zuführbereich und dem Entnahmebereich mit Vorformlingen, also vorformlingshaltend umlaufen. Die Heizvorrichtung weist erste und zweite form-und/oder kraftschlüssig an den Haltemitteln angreifende und deren Drehposition vorgebende Zwangsführungsmittel auf, die beide zumindest in dem Umlaufbereich angeordnet sind, in dem die Transporteinrichtungen vorformlingshaltend umlaufen. Das erste Zwangsführungsmittel ist ausgebildet, die Haltemittel so zu einer gleichförmigen und in der Regel kontinuierlichen Drehung um deren Längsachse anzutreiben, dass die Vorformlinge beim Führen entlang der Heizeinrichtungen in ihrer Umfangsrichtung gleichmäßig temperiert werden. Die zweiten Zwangsführungsmittel sind so ausgebildet, die Drehposition der Haltemittel so zwangszuführen, dass die Vorformlinge beim Führen entlang der Heizeinrichtungen in ihrer Umfangsrichtung ungleichmäßig temperiert werden (preferential heating). Dabei sind die ersten und die zweiten Zwangsführungsmittel so angeordnet und weisen eine solche Erstreckung auf, dass die Drehposition der Haltemittel in Förderrichtung wenigstens vom Zuführbereich bis zum Entnahmebereich durch die beiden Zwangsführungsmittel vorgeben ist, bevorzugt entlang der gesamten Umlaufstrecke. Wie auch zum Verfahrensanspruch erläutert, soll erfindungsgemäß von den ersten und zweiten Zwangsführungsmitteln die Drehposition der Haltemittel mindestens so lange zwangsgeführt werden, wie die Haltemittel vorformlingshaltend umlaufen. Spätestens ab dem Zeitpunkt der Übergabe der Vorformlinge auf die Haltemittel bis zu dem Zeitpunkt des Abnehmens der Vorformlinge von den Haltemitteln soll eine ununterbrochene Zwangsführung der Drehposition der Haltemittel erfolgen, wodurch stets die Ausrichtung der Vorformlinge über die stets definierte Drehposition der Haltemittel bekannt und gewährleistet ist. Auf diese Weise ist nicht erforderlich, dass vor der Übergabe in eine Umformstation eine Ausrichtung der temperierten Vorformlinge erfolgen muss.

Bevorzugt wird die Drehposition der Haltemittel während des gesamten Umlaufs entlang der Umlaufstrecke zwangsgeführt, also auch während des vorformlingslosen Umlaufs. Damit laufen die Haltemittel in keinem Bereich frei von Zwangsmitteln um, d.h. ihre Drehorientierung ist immer definiert, da durch die Zwangsführungsmittel vorgegeben.

Weitere vorteilhafte Ausführungsformen sind in den Unteransprüchen angegeben, deren Vorteile sich teilweise bereits aus den analogen und schon besprochenen vorteilhaften Ausführungsformen des Verfahrens ergeben.

Als besonders bevorzugte Ausführungsvariante zu den Zahnstangen wird angesehen, dass beide Längsseiten der Zahnstangen mit einem Zahnprofil für den kämmenden Eingriff mit einem Zahnrad versehen sind, wobei die beiden Längsseiten durch eine Drehung der Zahnstange um 180 Grad ineinander überführbar sind. Die Zahnstange ist dadurch möglichst langlebig benutzbar, denn sie kann beidseitig benutzt werden, da auf beiden Längsseiten ein Zahnprofil ausgebildet ist. Ist z.B. das Zahnprofil auf der einen Seite bereits deutlich abgenutzt, so kann durch schlichtes Drehen der Zahnstange um 180° diese weiter benutzt werden.

Es wird weiterhin mit Vorteil vorgeschlagen, dass die Zähne des Zahnprofils der Zahnstangen zu beiden Seiten identische Zahnflanken aufweisen. In aller Regel wird nur eine der beiden Zahnflanken intensiv beansprucht, während die andere weniger beansprucht wird. Dies ist bedingt durch die stets gleichbleibende Förderrichtung, die zu dieser einseitig stärkeren Belastung der Zähne führt. Bei Vorliegen symmetrischer Zähne sind beide Zahnflanken nutzbar. Es ist also möglich, die Zahnstange so zu drehen, dass die bisher kaum abgenutzten Zahnflanken nunmehr zu intensiv beanspruchten Zahnflanken werden. Insbesondere zusammen mit dem Vorsehen von Zahnprofilen auf beiden Längsseiten kann insgesamt die Zahnstange vierfach genutzt werden, was zu einer erheblichen Verlängerung der Nutzungsdauer führt.

Es wird weiterhin mit Vorteil vorgeschlagen, dass die Zahnstange aus einem Kunststoff hergestellt ist. Das mit der Zahnstange kämmende Gegenelement, z.B. ein Zahnrad, kann dann aus einem Metall oder einem anderen harten Material ausgeführt werden und insofern tritt Verschleiß an der Kunststoffzahnstange auf, die aber leichter austauschbar ist, als eine Transporteinrichtung aus einer Endloskette. Geeignete Kunststoffe sind dem Fachmann bekannt, z.B. PEEK oder PTFE.

Aus Gründen einfacher Montage und einfacher Ausrichtung der Zahnstangen zueinander wird mit Vorteil vorgeschlagen, dass in beiden stirnseitigen Endbereichen der Zahnstangen jeweils Lochmuster mit jeweils wenigstens einer, bevorzugt mehreren sich in Längsrichtung erstreckenden Lochreihen ausgebildet sind. Die Löcher der Lochreihe sollen sich von einer Ober- zu einer Unterseite der Zahnstange durch die Zahnstange hindurch erstrecken. Mittels Stiften lassen sich dann Zahnstangen verbinden, indem die Löcher zueinander fluchtend übereinandergelegt werden. Der Lochabstand innerhalb einer Lochreihe soll dabei bevorzugt dem Zahnabstand des Zahnprofils oder einem mehrfachen davon entsprechen, wobei die Lochmuster so angeordnet sind, dass bei einem Übereinanderlegen eines Endbereichs einer ersten Zahnstange mit einem Endbereich einer zweiten Zahnstange und bei fluchtender Anordnung der Lochmuster auch die Zähne der sich überlappenden Zahnprofile der übereinandergelegten Zahnstangenbereiche fluchten. Diese in den Endbereichen angeordneten Lochmuster sorgen also nicht nur für eine leichte Verbindbarkeit der Zahnstangen, sondern auch dafür, dass die übereinanderliegenden Zähne fluchten.

Die Zahnstangen werden im Bereich der Heizeinrichtungen angeordnet und erfahren deshalb Temperaturveränderungen. Es wird deshalb mit Vorteil vorgeschlagen, dass sie sich von ihrer Ober- zur Unterseite erstreckende Ausnehmungen sowie zu beiden Seiten der Ausnehmungen Einschnitte aufweisen, die angeordnet und ausgebildet sind, zusammen ein Parallelogramm aus Festkörpergelenken zu bilden. Auf diese Weise bleibt trotz Ausdehnung und Verkürzung durch Temperaturwechsel die Geradheit der Zahnstangen erhalten.

Ein geeignetes Mittel zur Lösung der gestellten Aufgaben stellt eine Zwangsführungseinrichtung mit mehreren Zahnstangen dar. Die Zwangsführungseinrichtung ist vorgesehen zur Verwendung in einer Heizvorrichtung für Vorformlinge und für den kämmenden Eingriff mit einem Zahnrad bei dessen Führung entlang der Zwangsführungseinrichtung. Die Zwangsführungseinrichtung weist mehrere Zahnstangen auf und weist im Übrigen die Merkmale auf, die zuvor zu den Zahnstangen angesprochen wurden. Bezüglich der mehrteiligen Ausführung ist dadurch ein modularer Aufbau möglich. Je nach Heizungsgröße wird z.B. eine unterschiedliche Anzahl an Heizkästen verwendet wird, sowohl für die in Umfangsrichtung gleichmäßige Temperierung als auch für "preferential heating". Der modulare Aufbau ist aus Kostengründen und aus Flexibilitätsgründen vorteilhaft. Auch unter dem Aspekt des Austauschs ergeben sich Vorteile.

Als weitere vorteilhafte Ausführungsvariante wird vorgeschlagen, dass die Zwangsführungseinrichtung wenigstens zwei Arten von Zahnstangen aufweist, nämlich eine erste Art mit einer ersten Länge und eine zweite Art mit einer deutlich geringeren Länge, wobei diese geringere Länge weniger als 50 %, bevorzugt weniger als 25 %, der ersten Länge beträgt. Diese Zahnstangen der zweiten Art werden vollständig mit Zahnstangen der ersten Art überlappend angeordnet zur Verdopplung der Zahnhöhe in diesem Bereich, der z.B. ein besonders belasteter Bereich sein kann, z.B. der Überlappbereich zwischen erster und zweiter Zwangsführungseinrichtung. Die Lebensdauer der Zahnstangen der ersten Art kann dadurch erhöht werden. Voraussetzung ist natürlich, dass das Zahnrad, das mit den Zahnstangen kämmt, eine entsprechende Ausdehnung in Achslänge des Vorformlings bzw. des Haltemittels hat, um mit den beiden übereinander angeordneten Zähnen gleichzeitig in Berührung zu kommen.

Aus ähnlichen Gründen erweist es sich als vorteilhaft, dass benachbarte Zahnstangen wenigstens teilweise überlappend angeordnet werden, sodass in diesem Überlappbereich die Zahnhöhe verdoppelt ist. Zudem ist dies vorteilhaft, weil dadurch eine gewisse Längenvariabilität besteht. Über das vorgegebene Lochbild und über dessen Korrelation mit den randseitigen Zähnen ist eine leichte Montierbarkeit gewährleistet.

Schließlich ist erfindungsgemäß eine Behälterherstellungsmaschine für die Umformung von Vorformlingen in Behälter, welche gekennzeichnet ist durch eine Heizvorrichtung nach einer der vorstehend beschriebenen Ausführungsformen. Diese Behälterherstellungsmaschine kann insbesondere eine Blasmaschine sein. Der Begriff der Blasmaschine meint auch solche Maschinen, in denen ein Recken der Vorformlinge z.B. mit einer Reckstange während der Einleitung von Blasgas oder von einem anderen Blasmedium zur blasformenden Umwandlung erfolgt. Alternativ kann die Behälterherstellungsmaschine auch eine solche Maschine sein, bei der die Vorformlinge durch ein flüssiges Umformmedium umgeformt werden, z.B. durch das Füllgut, das in dem Behälter verbleiben soll.

In Verbindung mit den nachfolgenden Figuren soll die Erfindung näher erläutert werden anhand von Ausführungsbeispielen. Es zeigen:
- Fig. 1: eine Skizze zur Veranschaulichung eines grundsätzlichen Aufbaus einer Vorrichtung zur Blasformung von Behältern,
- Fig. 2: einen Vorformling in einem Längsschnitt,
- Fig. 3: einen Querschnitt durch eine Anordnung eines Vorformlings im Bereich eines Heizstrahlers,
- Fig. 4: eine schematische Ansicht, die einen temperierten Vorformling zeigt,
- Fig. 5: ein Beispiel für eine Trageinrichtung mit Haltemittel mit einem davon gehaltenen Vorformling in zwei unterschiedlichen Ansichten;
- Fig. 6: einen Teilausschnitt eines Ausführungsbeispiels mit ersten und zweiten Zwangsführungsmitteln
- Fig. 7: das Ausführungsbeispiel aus Fig. 6 in einer anderen Ansicht; und
- Fig. 8a, 8b: ein bevorzugtes Ausführungsbeispiel einer Zahnstange in zwei unterschiedlichen Ansichtsperspektiven.

Nachfolgend wird zunächst der grundsätzliche Aufbau einer Maschine zur Umformung von Vorformlingen (1) in Behälter erläutert, z.B. in Flaschen, wobei dies am Beispiel einer Blasmaschine erfolgt. Der grundsätzliche Aufbau bliebe aber unverändert, wenn die Umformung der Vorformlinge (1) in Behälter nicht durch Blasluft erfolgte, sondern eine simultane Umformung und Befüllung mit Füllgut erfolgen würde. Insbesondere die Heizung H mit der Heizstrecke (24) bedürfte hierfür keiner Änderungen, denn unabhängig vom verwendeten Umformmedium ist der Vorformling (1) auf die erforderliche Umformungstemperatur zu erwärmen und ist dem Vorformling (1) ein geeignetes Temperaturprofil aufzuprägen.

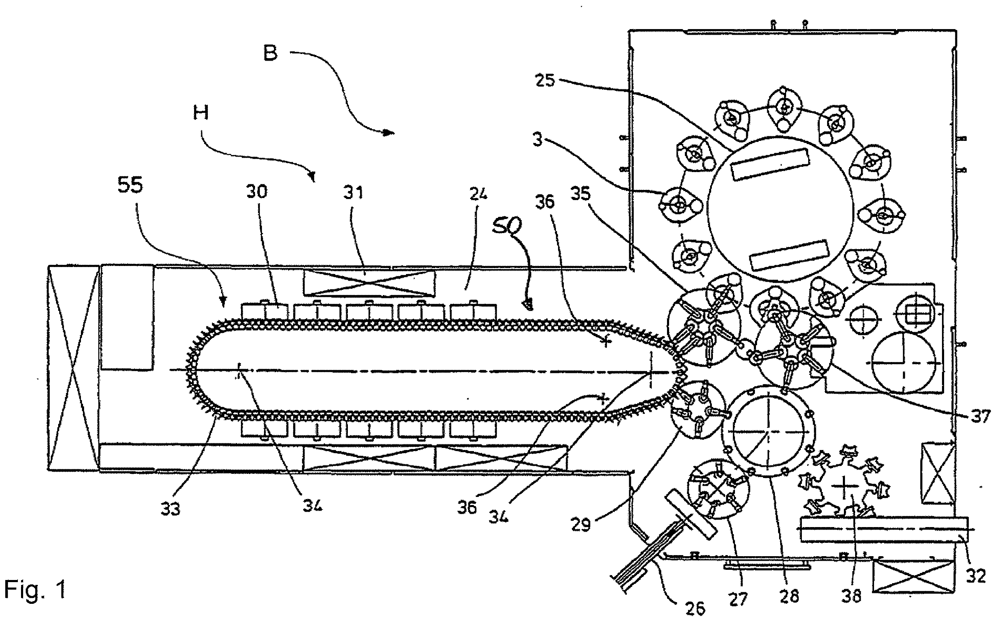

Fig. 1 zeigt zum allgemeinen Verständnis des technischen Umfeldes der Erfindung den grundsätzlichen Aufbau einer Blasmaschine (B), die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. In einem Übergabebereich erfolgt eine Übergabe der Vorformlinge (1) von einem Übergaberad (29) auf eine Transporteinrichtung. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich Blasstationen (3) angeordnet sind. Für die Übergabe an das Blasrad (25) entnimmt ein Transferrad (35) die Vorformlinge in einem Entnahmebereich von den Transporteinrichtungen. Die fertig geblasenen Behälter werden von weiteren Übergaberädern einer Ausgabestrecke (32) zugeführt.

Um einen Vorformling (1) derart in einen Behälter umformen zu können, dass der Behälter Materialeigenschaften aufweist, die eine lange Verwendungsfähigkeit von innerhalb des Behälters abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt im gewählten Beispiel durch Druckluftzuführung. Die Druckluftzuführung ist z.B. in eine Vorblasphase, in der Gas, zum Beispiel Pressluft, mit einem niedrigen Druckniveau zugeführt wird, und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 1 ist ebenfalls erkennbar, dass bei der dargestellten Ausführungsform die Heizstrecke (24) aus einer Vielzahl umlaufender Transporteinrichtungen (33) ausgebildet ist, die kettenartig aneinandergereiht und entlang von Umlenkrädern (34) geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Zuführrad (29) und einem Entnahmerad (35) zugewandten Ausdehnung der Heizstrecke (24) ein einzelnes relativ groß dimensioniertes Umlenkrad (34), das Kopfrad, und im Bereich von benachbarten Umlenkungen zwei vergleichsweise kleiner dimensionierte Umlenkräder (36) verwendet. Grundsätzlich sind aber auch beliebige andere Heizstreckenkonturen denkbar.

Zur Ermöglichung einer möglichst dichten Anordnung des Zuführrades (29) und des Entnahmerades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Umlaufabschnitten der Heizstrecke (24) und das größere Umlenkrad (34, Kopfrad) im unmittelbaren Übergabebereich zum Zuführrad (29) und zum Entnahmerad (35).

Die kettenartig verbundenen Trageinrichtungen (33) laufen um die beschriebenen Umlenkräder (34, 36) und entlang einer Umlaufstrecke um. Hierzu kann beispielsweise eines der Umlenkräder, z.B. das Kopfrad (34), oder mehrere der Umlenkräder drehangetrieben ausgeführt sein, z.B. indem ein Motor das Kopfrad (34) antreibt, oder z.B. indem eine mechanische Kopplung an die Drehung des Blasrades (25) erfolgt, welches z.B. über einen Drehantrieb verfügen kann. Das Zuführrad (29) übergibt Vorformlinge (1) auf Trageinrichtungen (33), die in einem Zuführbereich der Umlaufstrecke vorformlingslos ankommen. Von diesem Zuführbereich führen die nunmehr mit einem Vorformling versehenen Trageinrichtungen (33) den Vorformling (1) im Uhrzeigersinn entlang der Umlaufstrecke zunächst in Richtung auf das entfernte Umlenkrad (34), dann um dieses Umlenkrad (34) herum und dann zurück in Richtung auf das Entnahmerad (35). Sobald eine Trageinrichtung (33) mit einem Vorformling (1) in den Entnahmebereich der Umlaufstrecke gelangt, wird der Vorformling (1), der zu diesem Zeitpunkt seine für die Umformung erforderliche Erwärmung erfahren hat, von der Trageinrichtung (33) entfernt bzw. auf das Entnahmerad (35) übergeben und von diesem drehend weitergeführt hin zum Blasrad (25). Die nach diesem Entnahmevorgang vorformlingslose Trageinrichtung (33) läuft entlang der Umlaufstrecke nunmehr vom Entnahmebereich zum Zuführbereich, um dort erneut einen Vorformling (1) aufzunehmen.

Die dargestellten Zuführ- und Entnahmeräder (29) bzw. (35) können z.B. zangenartige Zuführ- bzw. Entnahmemittel aufweisen. Da diese gemeinsam als Transferräder zu bezeichnenden Räder für die vorliegende Erfindung nicht bedeutsam sind, wird auf eine weitere Beschreibung verzichtet. Auch das Blasrad (25) bedarf aus dem gleichen Grund keiner detaillierten Beschreibung. Diese Räder können wie im Stand der Technik in unterschiedlichster Art und Weise bekannt ausgeführt sein.

Nach einem fertigen Blasen der Behälter werden diese von einem Entnahmerad (37) aus dem Bereich der Blasstationen (3) herausgeführt und über das Übergaberad (28) und ein Ausgaberad (38) zur Ausgabestrecke (32) transportiert.

Die in Figur 1 dargestellte Heizstrecke (24) kann z.B. durch das Vorsehen einer größeren Anzahl von Heizstrahlern (30) modifiziert werden, um z.B. eine größere Menge von Vorformlingen (1) je Zeiteinheit temperieren zu können. Die vorstehend geschilderten Heizstrahler (30) sind ebenfalls lediglich als Beispiele für verwendbare Heizeinrichtungen zu verstehen. Es sind im Stand der Technik eine Vielzahl alternativer Konstruktionen bekannt. Es sind im Stand der Technik auch andere Heizverfahren bekannt, z.B. Beheizung der Vorformlinge durch Mikrowellenbestrahlung. Die Erfindung ist unabhängig vom konkreten Aussehen der Heizeinrichtungen.

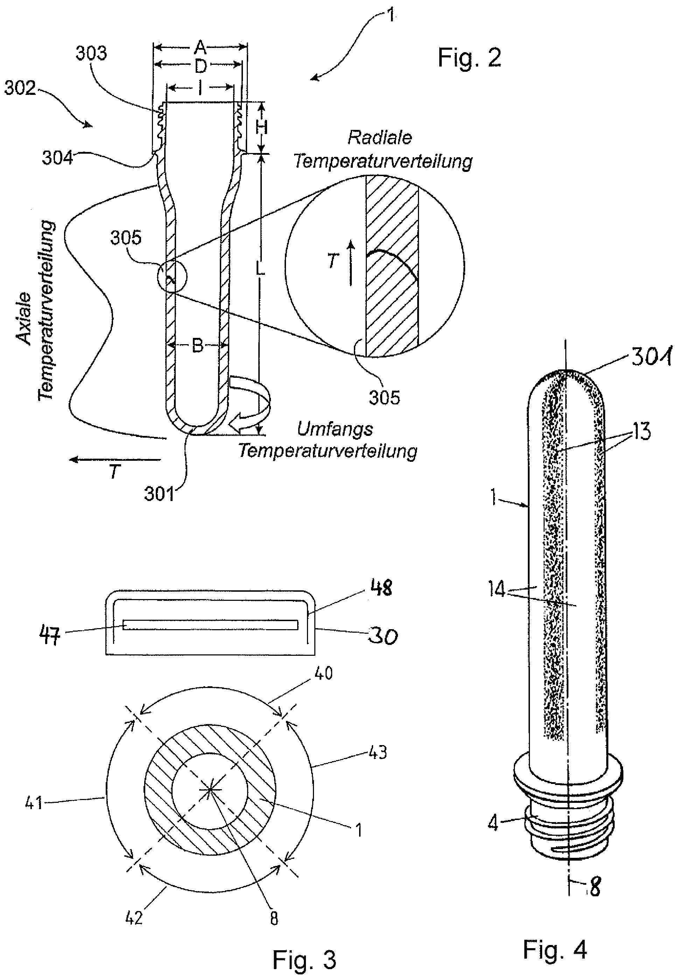

Figur 2 zeigt in einer Schnittansicht einen typischen Vorformling (1) mit einem geschlossenen Bodenbereich (301) und einem geöffneten Mündungsabschnitt (302). Im Bereich des Mündungsabschnittes (302) ist ein Außengewinde (303) sowie ein Stützring (304) ausgeformt. Nach erfolgter Temperaturkonditionierung ergibt sich in dem Vorformling (1) eine bestimmte Temperaturverteilung. So kann zum Beispiel durch eine entsprechende Beheizung in axialer Richtung des Vorformlings (1) ein Temperaturprofil erzeugt werden, wie dies linksseitig des Vorformlings (1) dargestellt ist. Es ist dort zu erkennen, dass im Bodenbereich (301) und in einem Bereich unterhalb des Stützringes (304) eine höhere Temperatur realisiert ist als in einem dazwischenliegenden Bereich. Es ist aber auch möglich, den Vorformling (1) in axialer Richtung homogen aufzuheizen.

Aus dem vergrößerten Abschnitt des Wandbereiches (305) ist ersichtlich, dass auch innerhalb der Vorformlingswand ein Temperaturverlauf einstellbar ist. Dies ist unter anderem dadurch bedingt, dass die Absorption der Heizstrahlung radial außen zu einer stärkeren Erwärmung führt, als radial innen. Temperaturunterschiede in der Vorformlingswand heben sich zwar mit der Zeit durch thermische Ausgleichsprozesse auf. Diese Temperaturausgleichsprozesse sind allerdings in den typischerweise aus PET bestehenden Vorformlingen relativ langsam.

Zusätzlich und erfindungsgemäß kann der Vorformling (1) in seiner Umfangsrichtung mit einem Temperaturprofil versehen werden. Fachüblich wird dann von "preferential heating" gesprochen. Dies ist zum Beispiel bekannt für Vorformlinge, die nach ihrer Temperaturkonditionierung in unrunde Behälter umgeformt werden sollen, zum Beispiel in ovale Behälter.

Fig. 3 zeigt einen Horizontalschnitt durch einen im Bereich einer beispielhaft gezeigten Heizeinrichtung (30) angeordneten Vorformling (1). Es ist erkennbar, daß die Heizeinrichtung (30) einen Heizstrahler (47) sowie einen Reflektor (48) aufweist. Ein Umfang des Vorformlings (1) ist bei dieser Ausführungsform in vier Winkelbereiche (40,41,42,43) unterteilt. In Richtung des Umfanges soll die Temperierung der Winkelbereiche (40) unterschiedlich erfolgen ("preferential heating"). Zur Herstellung eines Behälters (2) mit einer ovalen Kontur ist es beispielsweise zweckmäßig, jeweils die Winkelbereiche (40,42) sowie die Winkelbereiche (41,43) zumindest annähernd gleich zu temperieren. Insbesondere ist vorgesehen, die Winkelbereiche (40,42) mit einer höheren Temperatur als die Winkelbereiche (41,43) zu versehen, wenn ein ovaler Behälter (2) hergestellt werden soll. Die Größe der jeweiligen Winkelbereiche (40,41,42,43) hängt von der Gestaltung des Behälters (2) ab.

Zur Realisierung des Temperaturprofils in Richtung des Umfanges ist es beispielsweise möglich, eine Rotation des Vorformlings (1) um die Längsachse (8) durchzuführen. Bei einer Temperaturprofilierung in Umfangsrichtung mit vier Winkelbereichen (40,41,42,43) kann die Bewegung derart erfolgen, daß z.B. die sich gegenüberliegenden Winkelbereiche (40) und (41) insgesamt länger Heizstrahlern (47) zugewandt sind und dadurch stärker mit Heizstrahlung beaufschlagt werden, als die Winkelbereiche (41) und (43).

Beispielsweise ist es möglich, den Vorformling (1) zunächst vorab gleichmäßig zu temperieren, z.B. auf der in Figur 1 gezeigten Wegstrecke vom Zuführrad (29) bis zum entfernten Umlenkrad (34). In diesem Bereich können die Vorformlinge (1) z.B. kontinuierlich drehend an den dargestellten fünf Heizkästen (30) entlanggeführt werden. Dies ist im Stand der Technik bekannt und entsprechende Dreheinrichtungen sind ebenfalls im Stand der Technik bekannt. Anschließend, z.B. entlang der in Figur 1 sich vom entfernten Umlenkrad (34) bis hin zum Entnahmerad (35) erstreckenden Umlaufstrecke, könnte diese kontinuierliche Drehung beendet werden und z.B. der Vorformling (1) mit den Winkelbereichen (40) und (42) länger den Heizeinrichtungen (47) zugewandt an den Heizkästen (30) entlanggeführt werden. Denkbar ist z.B. auch, dass dieses "preferential heating" lediglich bei dem letzten Heizkasten (30) vor dem Entnahmerad (35) erfolgt oder bei den zwei oder drei letzten Heizkästen (30), während die übrigen Heizkästen (30) in der zuvor beschriebenen Weise für eine gleichmäßige Temperierung eingesetzt werden.

Fig. 4 zeigt einen Vorformling (1), nachdem dieser z.B. eine Heizvorrichtung H gemäß Fig. 1 durchlaufen und ein "preferential heating" erfahren hat, wie zu den Figuren 2 und 3 beschrieben. Der Vorformling (1) ist somit insgesamt auf eine Temperatur erwärmt, die höher ist als die Erweichungstemperatur des thermoplastischen Materials, aus dem der Vorformling besteht, sodass der Vorformling (1) insgesamt so temperaturkonditioniert ist, dass eine Umformung in einen Behälter erfolgen kann. Umfangsbereiche (13), die z.B. den Winkelbereichen (40) und (42) aus Figur 3 entsprechen können, sollen z.B. auf eine noch höhere Temperatur erwärmt sein, als die Umfangsbereiche (14), die z.B. den Winkelbereichen (41) und (43) aus Figur 3 entsprechen können. Es versteht sich, dass die wärmeren Bereiche (13) und die weniger warmen Bereiche (14) keine scharfen Grenzen aufweisen, sondern dass es eine stetige Änderung der Temperatur zwischen den beiden Bereichen gibt, da es aufgrund der Wärmeleitfähigkeit des thermoplastischen Materials zu Temperaturausgleichsprozessen kommt.

Die wärmeren Umfangsbereiche (13) sind aufgrund ihrer höheren Temperatur leichter verformbar als die weniger warmen Umfangsbereiche (14), wenn in bekannter Weise ein Druckmedium, z.B. Blasgas, in den Vorformling (1) eingeleitet wird. Somit haben die relativ wärmeren Umfangsbereiche (13) im Verlauf dieser Verformung ein größeres Streckvermögen im Vergleich zu den relativ weniger warmen Umfangsbereichen (14).

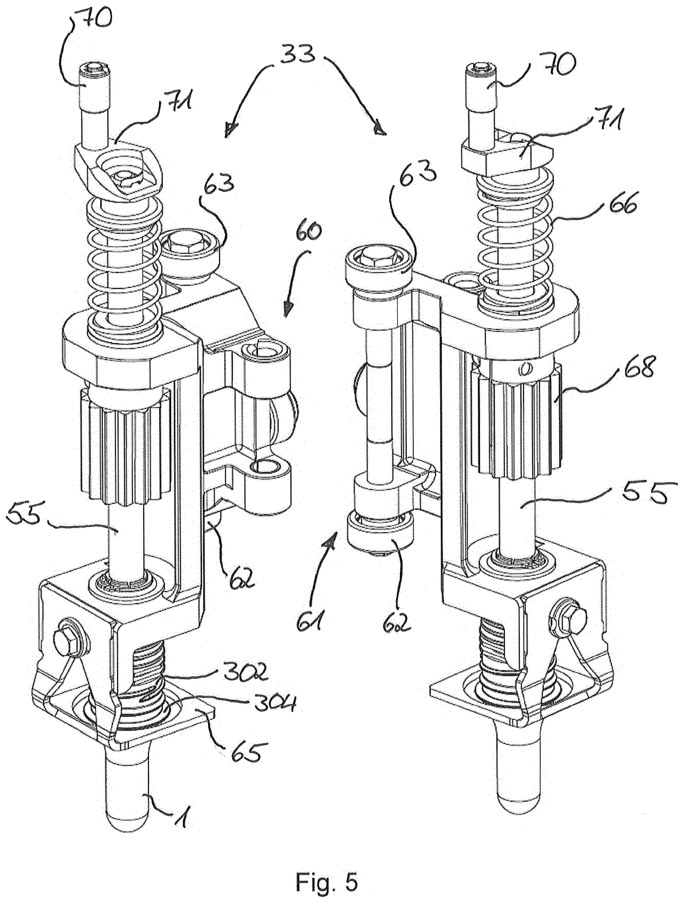

Zu Figur 1 wurde erläutert, dass mehrere Trageinrichtungen (33) zu einer kettenartigen Anordnung miteinander verbunden sind. Ein Ausführungsbeispiel für solche Trageinrichtungen (33) zeigt die Figur 5 in zwei unterschiedlichen Ansichten.

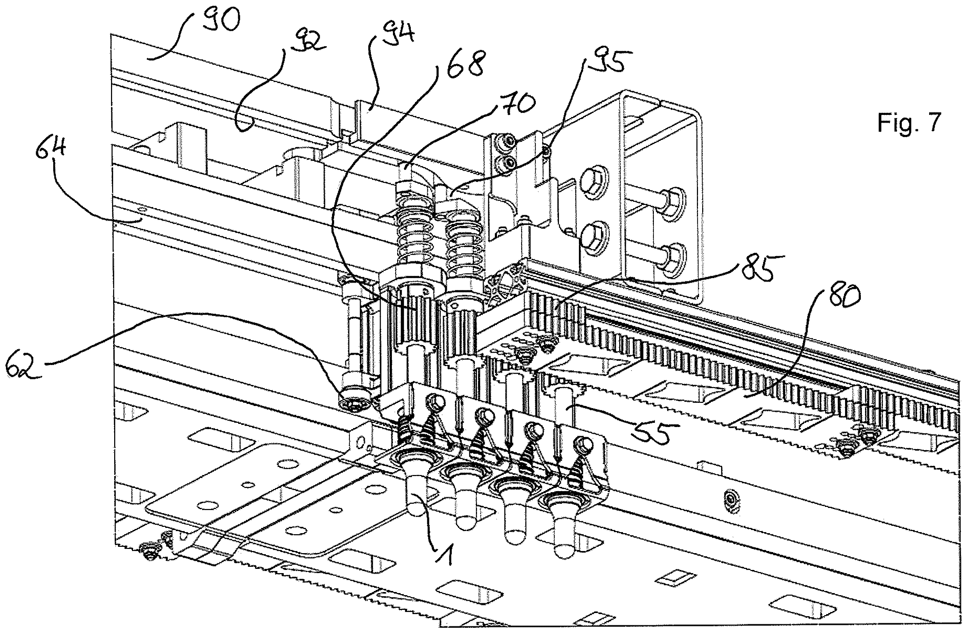

Die dargestellte Trageinrichtung (33) weist zum Zwecke der Verbindung mit weiteren gleich aufgebauten Trageinrichtungen Verbindungselemente (60) und (61) auf. Da die Art der Verbindung der Trageinrichtungen (33) zu einer umlaufenden Kette für die Erfindung nicht von Bedeutung ist, soll auf diese Elemente nicht weiter eingegangen werden. Die umlaufende Führung erfolgt dabei über die dargestellten beiden Führungsrollen (62) und (63), die mit stationären Führungskurven (64) zusammenwirken, von der eine z.B. in Figur 7 erkennbar ist.

Für das Halten eines Vorformlings (1) weist die Trageinrichtung (33) ein als Klemmdorn (55) ausgeführtes Haltemittel auf. Dieser Klemmdorn (55) ragt mit seinem Klemmkopf in das Innere des Mündungsbereichs (302) des Vorformlings (1) hinein und hält den Vorformling (1) dann aufgrund einer ausgeübten Klemmkraft. Entsprechende Klemmdorne sind im Stand der Technik bekannt. Zur Abschirmung des Mündungsbereichs (302) des Vorformlings (1) gegen Heizstrahlung weist die Trageinrichtung (33) eine Abschirmblende (65) auf. Zum Zwecke der Aufnahme eines Vorformlings und der Abgabe eines Vorformlings kann der Klemmdorn gegen die rückstellende Kraft einer Feder (66) nach unten gedrückt werden, bis der Mündungsbereich (302) unterhalb der Abschirmblende (65) angeordnet ist und z.B. von einer Zange am Stützring (304) oder im Bereich des Stützrings (304) ergriffen werden kann.

Der Klemmendorn (55) weist eine Längsachse auf, die in seiner Raumlage mit der Raumlage der Längsachse des Vorformlings (1) übereinstimmt. Weiterhin ist der Klemmdorn (55) drehbar in der Trageinrichtung (33) angeordnet bzw. gelagert, sodass er um seine Längsachse gedreht werden kann. Da die Drehachse des Vorformlings (1) und die Drehachse des Klemmdornes (55) im Raum deckungsgleich sind, führt das Drehen des Klemmdornes (55) um seine Längsachse zu einer Drehung des Vorformlings (1) um dessen Längsachse.

Zur Einbringung einer Drehkraft auf den Klemmdorn (55) weist dieser ein Zahnrad (68) auf, das in später noch darzustellender Weise während des Umlaufs der Trageinrichtung (33) in der Heizvorrichtung (H) an einer unbewegten Gegenstruktur entlanggeführt wird. An seinem unteren Ende hält der Klemmdorn (55) den Vorformling (1), während der Klemmdorn (55) an seinem entgegengesetzten anderen Ende einen beabstandet zu seiner Längsachse an einem Hebelarm (71) angeordneten Führungsstift (70) aufweist, der in ebenfalls später noch zu erläuternder Weise mit einer Führungsnut zusammenwirkt.

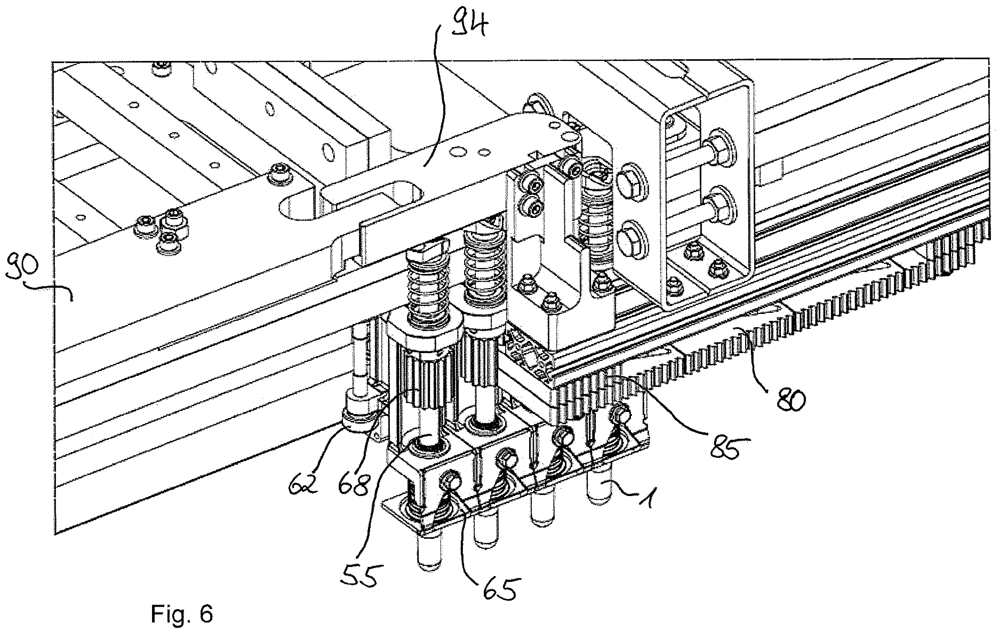

Die Figur 6 und 7 zeigen aus unterschiedlichen Ansichtsperspektiven vier kettenartig verbundene Trageinrichtungen (33), während die übrigen Kettenglieder nicht dargestellt sind. Dargestellt sind mehrere Zahnstangen (80), die insgesamt eine erste Zwangsführungseinrichtung ausbilden. Entlang dieser Zahnstangen (80) laufen die Trageinrichtungen (33) und das Zahnrad (68) jeder der Trageinrichtungen (33) kämmt dabei mit dem Zahnprofil (82) auf einer Längsseite der Zahnstangen (80). Aufgrund dieser Relativbewegung werden die Klemmdorne (55) zu einer Drehung um die eigene Längsachse angetrieben. Entsprechend führen die Vorformlinge (1), die von den Klemmdornen (55) gehalten sind, in den mit Zahnstangen (80) versehenen Bereichen eine kontinuierliche Drehung um die eigene Längsachse aus. Dabei werden diese Vorformlinge an in den Figur 6 und 7 zur zeichnerischen Vereinfachung nicht mehr dargestellten Heizkästen (30) entlanggeführt und erfahren infolge der geschilderten gleichförmigen Drehung eine in Umfangsrichtung homogene Erwärmung.

Die Figuren 6 und 7 zeigen weiter ein zweites Zwangsführungsmittel, das mit den Führungsstiften (70) der Klemmdorne (55) zusammenwirkt. Dieses Zusammenwirken ist besser erkennbar in Figur 7, da von unten auf diese zweiten Zwangsführungsmittel geblickt wird. Für dieses Zusammenwirken weist das zweite Zwangsführungsmittel auf seiner dem Klemmdorn (55) zugewandten Unterseite eine Führungsnut (92) auf, in die der Führungsstift (70) hineinragt und die daher die Drehposition des Führungsstiftes (70) vorgibt. Im in Figur 7 zur linken Seite hin dargestellten Bereich der Führungsnut (92) verläuft diese geradlinig, sodass der Klemmdorn (55) in diesem Bereich drehfest gehalten ist, sodass auch der Vorformling (1) in diesem Bereich drehfest durch die Heizvorrichtung (H) geführt wird und drehfest an den in Figur 7 nicht dargestellten Heizkästen entlangläuft. Die den Heizelementen (47) und den Reflektoren (48) der Heizkästen (30) zugewandten Seiten der Vorformlinge (1) erfahren eine höhere Beaufschlagung mit Heizstrahlung, während die in Förderrichtung und entgegen der Förderrichtung weisenden Seitenflächen weniger stark von Heizstrahlung beaufschlagt werden, unter anderem weil diese Seitenflächen von benachbarten Vorformlingen (1) abgeschattet werden. In dem Bereich, in dem die Drehposition der Klemmdorne (55) von der Führungsnut (92) des zweiten Zwangsführungsmittels bestimmt wird, erfolgt also eine in Umfangsrichtung des Vorformlings (1) ungleichmäßige Temperierung, in technisch üblicher Weise wird von "Preferential Heating" gesprochen.

Der in den Figuren 6 und 7 dargestellte Ausschnitt der in Figur 1 insgesamt mit Bezugszeichen (24) bezeichneten Heizstrecke ist der Bereich, in dem der Übergang vom ersten Zwangsführungsmittel zum zweiten Zwangsführungsmittel erfolgt. In diesem Bereich, den die Trageinrichtungen (33) in der gezeigten Darstellung von rechts nach links durchlaufen, wird die Drehposition der Klemmdorne (55) zunächst durch die Zahnstangen (80) und die daran ausgeformten Zahnprofile (82) vorgegeben, in die die Zähne des Zahnrades (68) des Klemmdornes (55) eingreifen. Zum linksseitigen Ende der Zahnstangen (80) beginnt ein gekrümmter Bereich (95) der Führungsnut (92), da aufgrund der erzwungenen Drehbewegung des Klemmdornes (55) auch der Führungsstift (70) eine Drehbewegung ausführt. In diesem Bereich (95) ist die zweite Zwangsführungseinrichtung mit einer Führungsnut (92) ausgestattet, die einerseits einen gekrümmten Verlauf hat, und andererseits von links nach rechts betrachtet eine sich erweiternde Nutbreite zeigt, bzw. von rechts nach links betrachtet sich trichterförmig verjüngt, um als Einfädelhilfe für die Führungsstifte (70) der Klemmdorne (55) zu wirken. Es ist dabei vorgesehen, dass zu jedem Zeitpunkt die Drehposition des Klemmdornes (55) durch die Zwangsführungsmittel vorgegeben ist, nämlich entweder durch die Zahnstangen (80) oder durch die Führungsnut (92) oder durch beide. In einem kurzen Übergangsbereich rollt nämlich das Zahnrad (68) des Klemmdornes (55) an der Zahnstruktur (82) der Zahnstange (80) ab, während gleichzeitig der Führungsstift (70) bereits in der gekrümmten Führungsnut (92) geführt ist.

In den in den Figuren 6 und 7 nicht dargestellten Bereichen der Heizstrecke (24) sind nicht dargestellte Zwangsführungsmittel vorgesehen, die in der zu den Figuren 6 und 7 gezeigten Art ausgeführt sein können. Es ist mindestens vorgesehen, das die Drehposition der Klemmdorne (55) ausgehend vom Übergabebereich der Vorformlinge (1) vom Übergaberad (29) auf die Trageinrichtungen (33) bis hin zum Entnahmebereich von Zwangsführungsmitteln festgelegt ist, sodass bis zum Abnehmen der Vorformlinge (1) von den Trageinrichtungen (33) im Bereich des Entnahmerades (35) die Drehposition durch äußere Einwirkungen festgelegt ist. Bevorzugt ist aber auch der verbleibende Bereich entlang des Kopfrades (34) zwischen dem Entnahmerad (35) und dem Eingaberad (29) mit Zwangsführungsmitteln versehen, sodass die Drehposition des Klemmdornes (55) über den gesamten Umlauf festgelegt ist.

Für eine vereinfachte Justage und Ausrichtung zwischen den ersten Zwangsführungsmitteln in Form der Zahnstangen (80) und den zweiten Zwangsführungsmitteln weisen diese zweiten Zwangsführungsmittel ein Einfädelelement (94) auf. Dieses Einfädelelement (94) weist in seinem Einlaufbereich (95) eine sich trichterförmig in Förderrichtung verjüngende Einfädelöffnung auf, die in einen gekrümmten Nutverlauf mit sich verengender Nutbreite übergeht und schließlich in eine Nut konstanter Breite und mit Nuterstreckung in Förderrichtung mündet. Dieses Einfädelelement (94) ist separat ausgeführt zu einer sich anschließenden Führungsschiene (90), die über seine gesamte Längserstreckung über eine in Förderrichtung verlaufende Führungsnut (92) konstanter Breite aufweist. Das Einfädelelement (94) kann zu Justagezwecken verschoben werden, um den Übergang und die kurzzeitige Zwangsführung des Klemmdorns (55) durch beide Zwangsführungsmittel störungsfrei und ein verklemmen verhindernd zu ermöglichen.

Dieser Übergangsbereich ist in Bezug auf die Zahnstangen (80) auch dadurch charakterisiert, dass in diesem Bereich ein in Förderrichtung kurz dimensioniertes Füllstück (85) angeordnet ist, das in diesem Bereich zu einer Verdoppelung der Zahnhöhe der Zahnstange (80) führt.

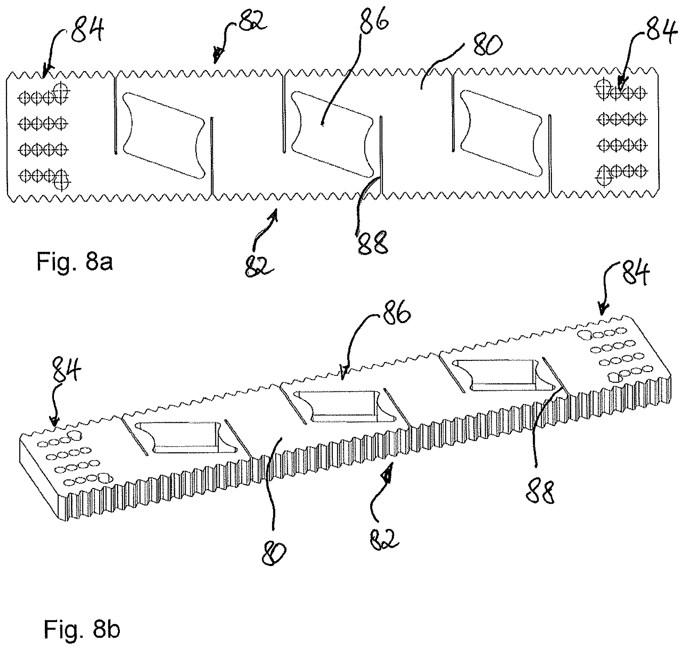

Am rechten Rand der Figuren 6 und 7 ist noch erkennbar, dass sich eine zweite Zahnstange (80) anschließt, die überlappend mit der bis zum Übergangsbereich mit dem Einfädelelement (94) führenden Zahnstange (80) angeordnet ist. Zu den Figuren 8a und 8b lassen sich weitere Details und weitere vorteilhafte Merkmale zu den Zahnstangen (80) erkennen und erläutern.

Aus der Aufsicht in Figur 8a ist zunächst gut erkennbar, dass die Zahnstange (80) auf ihren beiden Längsseiten identische Zahnprofile (82) aufweist. Dabei ist das Profil der einzelnen Zähne der Zahnprofile (82) so gewählt, dass beide Zahnflanken identisch aussehen, also symmetrisch zur Zahnmitte sind. Auf diese Weise ist es möglich, die Zahnstange (80) z.B. um 180° so zu drehen, dass die in Figur 8a gezeigte Oberseite zur Unterseite wird, während die Längsseiten mit den Zahnprofilen (82) in der dargestellten Ausrichtung oben/unten verbleiben. Weiter ist erkennbar, dass eine andere Drehung um 180° die Zahnstange (80) ebenfalls in sich selbst überführt, nämlich indem die in Figur 8a in der Aufsicht dargestellte Oberseite unverändert die Oberseite bleibt, aber die obere Zahnleiste (82) zur unteren Zahnleiste (82) wird. Aufgrund der dargestellten Symmetrie der Zähne der Zahnleiste (82) und der Zahnstange (80) bezüglich der auf Ihren Längsseiten angeordneten Zahnleiste (82) lässt sich die Zahnstange (80) in vier verschiedenen Orientierungen einbauen und verwenden, sodass z.B. nach einer bestimmten Verwendungsdauer ein eintretender Verschleiß an den Zahnflanken aufgefangen werden kann durch einen wie oben geschilderten gedrehten Einbau der Zahnstangen (80).

Die dargestellten Ausführungsbeispiele der Zahnstangen (80) weisen vorteilhaft in ihren Endbereichen Lochmuster (84) auf, um miteinander verbunden zu werden durch Hindurchstecken von Verbindungsstiften. Der Lochabstand und die Anordnung der Löcher der Lochmuster (84) ist dabei so gewählt, dass bei einem Übereinanderlegen benachbarter Endbereiche von Zahnstangen (80) und bei Einschieben von Verbindungsstiften durch die Löcher übereinanderliegender Zahnstangen (80) auch deren Zähne der übereinanderliegenden Zahnprofile (82) fluchtend zueinander ausgerichtet sind.

Die in dem Bereich zwischen den endseitig angeordneten Lochmustern (84) ausgebildeten Ausnehmungen (86) und Einschnitte (88) bewirken, dass bei thermischer Ausdehnung der Zahnstange (80) diese sich nicht verkrümmt. Jede der Ausnehmungen (86) stellt zusammen mit den beiden zugeordneten Einschnitten (88) zu beiden Seiten ein Parallelogramm aus Festkörpergelenken dar.

## Patentansprüche

1. Heizverfahren zur thermischen Konditionierung von Vorformlingen (1), bei dem die Vorformlinge in einer Förderrichtung durch eine Heizvorrichtung (H) geführt werden, wobei in der Heizvorrichtung (H) mehrere Heizeinrichtungen (30) stationär und in der Förderrichtung hintereinanderliegend angeordnet werden und wobei das Führen der Vorformlinge (1) entlang der Heizeinrichtungen (30) durch mehrere Trageinrichtungen (33) für Vorformlinge erfolgt, die miteinander verbunden werden zur Ausbildung einer Endlostransportkette, wobei die Endlostransportkette angetrieben wird zu einem kontinuierlichen Umlauf innerhalb der Heizvorrichtung (H) in Förderrichtung entlang einer Umlaufstrecke, um von den Trageinrichtungen (33) gehaltene Vorformlinge (1) zum Zwecke der thermischen Konditionierung entlang der Heizeinrichtungen (30) zu transportieren, wobei jede Trageinrichtung (33) mit einem Haltemittel (55) für Vorformlinge (1) versehen ist, das den Vorformling (1) hält und das drehbar in der Trageinrichtung (33) angeordnet wird für eine Drehung des Vorformlings (1) um dessen Längsachse, wobei in einem Zuführbereich der Umlaufstrecke den Trageinrichtungen (33) Vorformlinge () zugeführt und von deren Haltemitteln (55) aufgenommen werden, wobei in einem Entnahmebereich der Umlaufstrecke die temperaturkonditionierten Vorformlinge (1) von den Haltemitteln (55) der Trageinrichtungen (33) abgenommen werden, sodass die Transporteinrichtungen (33) zwischen dem Entnahmebereich und dem Zuführbereich vorformlingslos und zwischen dem Zuführbereich und dem Entnahmebereich vorformlingshaltend umlaufen, wobei während des vorformlingshaltenden Umlaufs in einem ersten Umlaufstreckenteilbereich auf die Drehposition der Haltemittel (55) von einem ersten form- und/oder kraftschlüssig angreifenden Zwangsführungsmittel (80) eingewirkt wird und in einem zweiten Umlaufstreckenteilbereich auf die Drehposition der Haltemittel (55) von einem zweiten form- und/oder kraftschlüssig angreifenden Zwangsführungsmittel (90) eingewirkt wird, wobei das erste Zwangsführungsmittel (80) die Haltemittel (55) so zu einer Drehung antreibt, dass die Vorformlinge (1) beim Führen entlang der Heizeinrichtungen (30) in ihrer Umfangsrichtung gleichmäßig temperiert werden, und wobei die zweiten Zwangsführungsmittel (90) die Drehposition der Haltemittel (55) so zwangsführen, dass die Vorformlinge (1) beim Führen entlang der Heizeinrichtungen (30) in ihrer Umfangsrichtung ungleichmäßig temperiert werden (preferential heating), **dadurch gekennzeichnet, dass** die ersten und zweiten Zwangsführungsmittel (80, 90) die Drehposition der Haltemittel (55) mindestens so lange zwangsführen, wie die Haltemittel (55) vorformlingshaltend umlaufen, bevorzugt während des gesamten Umlaufs entlang der Umlaufstrecke.

2. Heizverfahren nach Anspruch 1, **dadurch gekennzeichnet, dass** in einem Überlappbereich zwischen dem ersten und dem zweiten Zwangsführungsmittel (80, 90) beide Zwangsführungsmittel auf die Drehposition der Haltemittel (55) einwirken.

3. Heizverfahren nach Anspruch 1 oder 2, **dadurch gekennzeichnet, dass** die zweiten Zwangsführungsmittel (90) einen Mitnehmer (70) am Haltemittel (55) entlang einer Führungskurve (92) führen und/oder die ersten Zwangsführungsmittel (80) mit einem Drehantriebskörper (68) am Haltemittel (55) kämmen.

4. Heizverfahren nach Anspruch 3, **dadurch gekennzeichnet, dass** die ersten Zwangsführungsmittel als mehrere in Förderrichtung hintereinander angeordnete Zahnstangen (80) ausgeführt sind, die mit dem Drehantriebskörper (68) kämmen.

5. Heizvorrichtung (H) für die thermische Konditionierung von Vorformlingen (1), durch die Vorformlinge (1) zum Zwecke ihrer Temperaturkonditionierung in einer Förderrichtung geführt werden, wobei in der Heizvorrichtung (H) mehrere Heizeinrichtungen (30) stationär und in der Förderrichtung hintereinanderliegend angeordnet sind, wobei die Heizvorrichtung (H) mehrere Trageinrichtungen (33) für Vorformlinge aufweist, die miteinander verbunden sind zur Ausbildung einer Endlostransportkette, wobei die Endlostransportkette antreibbar ist zu einem kontinuierlichen Umlauf innerhalb der Heizvorrichtung (H) in Förderrichtung entlang einer Umlaufstrecke, wobei bei diesem Umlauf entlang der Umlaufstrecke das Führen der Vorformlinge (1) entlang der Heizeinrichtungen (30) erfolgt, wobei jede Trageinrichtung (33) ein Haltemittel (55) für Vorformlinge (1) aufweist, das ausgebildet ist für das Halten des Vorformlings (1), und das drehbar in der Trageinrichtung (33) angeordnet ist für eine Drehung des gehaltenen Vorformlings (1) um dessen Längsachse, wobei die Heizvorrichtung (H) einen Zuführbereich für Vorformlinge aufweist, in dem den Trageinrichtungen (33) Vorformlinge (1) zuführbar sind und in dem von den Haltemitteln (55) der Trageinrichtungen Vorformlinge aufnehmbar sind, wobei die Heizvorrichtung weiterhin einen Entnahmebereich aufweist, in dem die temperaturkonditionierten Vorformlinge (1) von den Haltemitteln (55) der Trageinrichtungen (33) abnehmbar sind, sodass im Betrieb der Heizvorrichtung die Transporteinrichtungen (33) mit ihren Haltemitteln (55) zwischen dem Entnahmebereich und dem Zuführbereich vorformlingslos und zwischen dem Zuführbereich und dem Entnahmebereich vorformlingshaltend umlaufen, wobei die Heizvorrichtung erste und zweite form- und/oder kraftschlüssig an den Haltemitteln (55) angreifende und deren Drehposition vorgebende Zwangsführungsmittel (80, 90) aufweist, die beide zumindest in dem Umlaufbereich angeordnet sind, in dem die Transporteinrichtungen vorformlingshaltend umlaufen, wobei das erste Zwangsführungsmittel (80) ausgebildet ist, die Haltemittel (55) so zu einer gleichförmigen Drehung um deren Längsachse anzutreiben, dass die Vorformlinge (1) beim Führen entlang der Heizeinrichtungen (30) in ihrer Umfangsrichtung gleichmäßig temperiert werden, und wobei die zweiten Zwangsführungsmittel (90) so ausgebildet sind, die Drehposition der Haltemittel (55) so zwangszuführen, dass die Vorformlinge (1) beim Führen entlang der Heizeinrichtungen (30) in ihrer Umfangsrichtung ungleichmäßig temperiert werden (preferential heating), **dadurch gekennzeichnet, dass** die ersten und zweiten Zwangsführungsmittel (80, 90) so angeordnet sind und eine solche Erstreckung aufweisen, dass die Drehposition der Haltemittel (55) in Förderrichtung wenigstens vom Zuführbereich bis zum Entnahmebereich durch die beiden Zwangsführungsmittel vorgeben ist, bevorzugt entlang der gesamten Umlaufstrecke.

6. Heizvorrichtung (H) nach Anspruch 5, **dadurch gekennzeichnet, dass** in einem Überlappbereich zwischen dem ersten (80) und dem zweiten (90) Zwangsführungsmittel beide Zwangsführungsmittel in Eingriff mit dem Haltemittel (55) stehen.

7. Heizvorrichtung (H) nach Anspruch 5 oder 6, **dadurch gekennzeichnet, dass** die zweiten Zwangsführungsmittel (90) eine Führungskurve (92) aufweisen, entlang der ein Mitnehmer (70) am Haltemittel geführt ist und/oder die ersten Zwangsführungsmittel (80) Kämmmittel aufweisen, die mit einem Drehantriebskörper (68) am Haltemittel (55) kämmend ausgeführt und angeordnet sind.

8. Heizvorrichtung (H) nach Anspruch 7, **dadurch gekennzeichnet, dass** die ersten Zwangsführungsmittel als mehrere in Förderrichtung hintereinander angeordnete Zahnstangen (80) ausgeführt sind.

9. Heizvorrichtung (H) nach Anspruch 8, wobei die Zahnstangen (80) eine Längserstreckung in Förderrichtung aufweisen, **dadurch gekennzeichnet, dass** beide Längsseiten der Zahnstangen (80) mit einem Zahnprofil (82) für den kämmenden Eingriff mit einem Zahnrad (68) versehen sind, wobei die beiden Längsseiten durch eine Drehung der Zahnstange (80) um 180 Grad ineinander überführbar sind.

10. Heizvorrichtung (H) nach Anspruch 8 oder 9, **dadurch gekennzeichnet, dass** die Zähne des Zahnprofils (82) der Zahnstangen (80) zu beiden Seiten identische Zahnflanken aufweisen.

11. Heizvorrichtung (H) nach einem der Ansprüche 8 bis 10, **dadurch gekennzeichnet, dass** die Zahnstange (80) aus einem Kunststoff hergestellt ist.

12. Heizvorrichtung (H) nach einem der Ansprüche 8 bis 11, **dadurch gekennzeichnet, dass** in beiden stirnseitigen Endbereichen der Zahnstangen (80) jeweils Lochmuster (84) mit jeweils wenigstens einer, bevorzugt mehreren sich in Längsrichtung erstreckenden Lochreihen ausgebildet sind, wobei die Löcher der Lochreihe sich von einer Ober- zu einer Unterseite der Zahnstange (80) durch die Zahnstange hindurch erstrecken, wobei der Lochabstand innerhalb einer Lochreihe dem Zahnabstand des Zahnprofils oder einem mehrfachen davon entspricht, wobei die Lochmuster so angeordnet sind, dass bei einem Übereinanderlegen nur eines Endbereichs einer ersten Zahnstange (80) mit nur einem Endbereich einer zweiten Zahnstange (80) und bei fluchtender Anordnung der Lochmuster die Zähne der sich überlappenden Zahnprofile der übereinandergelegten Zahnstangenbereiche fluchten.

13. Heizvorrichtung (H) nach einem der Ansprüche 8 bis 12, **dadurch gekennzeichnet, dass** die Zahnstangen (80) sich von ihrer Ober- zur Unterseite erstreckende Ausnehmungen (86) aufweisen und zu beiden Seiten der Ausnehmungen (86) Einschnitte (88) aufweisen, die angeordnet und ausgebildet sind, zusammen ein Parallelogramm aus Festkörpergelenken zu bilden.

14. Heizvorrichtung (H) nach einem der Ansprüche 8 bis 13, **dadurch gekennzeichnet, dass** die Zahnstangen (80) bei Drehung um 180 Grad um eine Höhenachse der Zahnstangen, die durch den geometrischen Mittelpunkt der Zahnstange verläuft, und/oder bei Drehung um 180 um eine Längsachse der Zahnstangen, die durch diesen Mittelpunkt verläuft, in sich überführt werden.

15. Behälterherstellungsmaschine (B) für die Umformung von Vorformlingen (1) in Behälter, **gekennzeichnet durch** eine Heizvorrichtung (H) nach einem der Ansprüche 5 bis 14.

## Claims

1. A heating method for the thermal conditioning of preforms (1), wherein the preforms are guided through a heating device (H) in a conveyance direction, wherein a plurality of heating devices (30) are arranged in a stationary manner in the heating device (H) one behind the other in the conveyance direction, and wherein the preforms (1) are guided along the heating devices (30) by a plurality of support devices (33) for preforms which are connected to each other to form a an endless transport chain, wherein the endless transport chain is driven into a continuous cycle within the heating device (H) in the conveyance direction along a circulation line for the purpose of transporting preforms (1) held by the support devices (33) along the heating devices (30) for the purpose of thermal conditioning, wherein each support device (33) is provided with a holding means (55) for preforms (1), which hold the preform (1) and which are arranged in the support device (33) in a rotatable manner to rotate the preform (1) around its longitudinal axis, wherein, in a feeding area of the circulation line, preforms (1) are fed to the support devices (33) and are held by their holding means (55), wherein, in a removal area of the circulation line, the temperature-conditioned preforms (1) are removed from the holding means (55) of the support devices (33) so that the support devices (33) circulate between the removal area and the feeding area without a preform, and hold a preform between the feeding area and the removal area, wherein, during the circulation that occurs while holding the preform, in a first circulation line section, a first forced guidance means (80) acts on the rotating position of the holding means (55) in a form-fitting and/or force-fitting manner and, in a second circulation line, the second forced guidance means (90) acts on the rotating position of the holding means (55) in a form-fitting and/or force-fitting manner, wherein the first forced guidance means (80) propels the holding means (55) to rotate in such a way that the preforms (1) are uniformly temperature-conditioned in their circumferential direction when being guided along the heating devices (30), and wherein the second forced guidance means (90) forcibly actuate the rotating position of the holding means (55) in such a way that the preforms (1) are unevenly temperature-conditioned in their circumferential direction when guided along the heating devices (30) (preferential heating), **characterized in that**
the first and second forced guidance means (80, 90) forcibly actuate the rotating position of the holding means (55) at least as long as the holding means (55) circulate while holding the preform(s), preferably during the entire course of circulation along the circulation line.

2. The heating method according to Claim 1, **characterized in that,** in an overlapping area between the first and the second forced guidance means (80, 90), both forced guidance means act on the rotating position of the holding means (55).

3. The heating method according to Claim 1 or 2, **characterized in that** the second forced guidance means (90) guide a carrier (70) on the holding means (55) along a guide curve (92) and/or the first forced guidance means (80) comb the holding means (55) with a rotary drive element (68).

4. The heating method according to Claim 3, **characterized in that** the first forced guidance means are designed as a plurality of racks (80) arranged in sequence in the conveyance direction, which comb with the rotary drive element (68).

5. The heating device (H) for the thermal conditioning of preforms (1) via which preforms (1) are guided in one direction for the purpose of their temperature conditioning, wherein, in the heating device (H), a plurality of heating devices (30) are arranged in a stationary manner in the conveyance direction one behind the other, wherein the heating device (H) comprises a plurality of supporting devices (33) for preforms which are connected to each other to form an endless transport chain, wherein the endless transport chain can be driven into a continuous circulation within the heating device (H) in the conveyance direction along a circulation line, wherein, during this circulation along the circulation line, the preforms (1) are guided along the heating devices (30), wherein each support device (33) comprises a holding means (55) for preforms (1), which is designed for holding the preform (1), and which is arranged in the support device (33) in a rotatable manner for rotating the held preform (1) around its longitudinal axis, wherein the heating device (H) comprises a feeding area for preforms in which preforms (1) can be fed to the supporting devices (33) and in which preforms can be held by the holding means (55) of the supporting devices, wherein the heating device also comprises a removal area in which the temperature-conditioned preforms (1) can be removed from the holding means (55) of the support devices (33), so that, during the operation of the heating device, the support devices (33) with their holding means (55) circulate between the removal area and the feeding area without a preform and, between the feeding area and the removal area in a preform holding manner, wherein the heating device comprises first and second forced guide devices (80, 90) acting in a form-and/or force-fit manner on the holding means (55) and determining their rotating position, both of which are arranged at least in the circulation area, wherein the transport devices circulate in a preform-holding manner, wherein the first forced guidance means (80) is designed to propel the holding means (55) to uniformly rotate around its longitudinal axis in such a way that the preforms (1) are uniformly temperature-conditioned in their circumferential direction when guided along the heating devices (30), and wherein the second forced guidance means (90) are designed to forcibly actuate the rotating position of the holding means (55) in such a way that the preformed devices (1) are uniformly temperature-conditioned in their circumferential direction, that the preforms (1) are unevenly temperature-conditioned in their circumferential direction when guided along the heating devices (30) (preferential heating), **characterized in that** the first and second forced guidance means (80, 90) are arranged in such a way and comprise such an extension that the rotating position of the holding means (55) in the conveyance direction is specified by the two forced guidance means at least from the feeding area to the removal area, preferably along the entire circulation line.

6. The heating device (H) according to Claim 5, **characterized in that,** in an overlapping area between the first (80) and the second (90) forced guidance means, both forced guidance means are engaged with the holding means (55).

7. The heating device (H) according to Claim 5 or 6, **characterized in that** the second forced guidance means (90) comprise a guide curve (92) along which a carrier (70) is guided on the holding means and/or the first forced guidance means (80) comprise combing means which are designed and arranged combing with a rotary drive element (68) on the holding means (55).

8. The heating device (H) according to Claim 7, **characterized in that** the first forced guidance means are designed as a plurality of racks (80) arranged in sequence in the conveyance direction.

9. The heating device (H) according to Claim 8, wherein the racks (80) comprise a longitudinal extension in the conveyance direction, **characterized in that** both longitudinal sides of the racks (80) are provided with a toothed profile (82) for a combing engagement with a gear wheel (68), wherein the two longitudinal sides can be transferred into each other by rotating the rack (80) by 180 degrees.

10. The heating device (H) according to Claim 8 or 9, **characterized in that** the teeth of the tooth profile (82) of the racks (80) comprise identical tooth flanks on both sides.

11. The heating device (H) according to any one of the Claims 8 to 10, **characterized in that** the rack (80) is made of a plastic.

12. The heating device (H) according to any one of the Claims 8 to 11, **characterized in that,** in both end areas of the racks (80), hole patterns (84) are formed, each with at least one, preferably a plurality of rows of holes extending in the longitudinal direction, wherein the holes of the row of holes extend from an upper to a underside of the rack (80) through the rack, wherein the hole spacing within a row of holes corresponds to the tooth spacing of the tooth profile or a multiple thereof, wherein the hole patterns are arranged in such a way that when only one end region of a first rack (80) is superimposed with only one end region of a second rack (80), and when the hole patterns are aligned, the teeth of the overlapping tooth profiles of the superimposed rack regions align.

13. The heating device (H) according to any one of the Claims 8 to 12, **characterized in that** the racks (80) comprise recesses (86) extending from their top side to the underside and comprise incisions (88) on either side of the recesses (86), which are arranged and designed to form together a parallelogram of solid-body joints.

14. The heating device (H) according to any one of the Claims 8 to 13, **characterized in that** the racks (80) are transferred into themselves when rotated by 180 degrees around a height axis of the racks passing through the geometric centre point of the rack and/or when rotated by 180 by a longitudinal axis of the racks passing through that centre point.

15. A container manufacturing machine (B) for the forming of preforms (1) into containers, **characterized by** a heating device (H) according to any one of the Claims 5 to 14.

## Revendications

1. Procédé de chauffage pour le conditionnement thermique de préformes (1) dans le cadre duquel les préformes sont conduites pour traverser un dispositif de chauffage (H) selon une direction de transport, plusieurs unités de chauffage (30) stationnaires étant agencées dans le dispositif de chauffage (H) l'une derrière l'autre dans la direction de transport et la conduite des préformes (1) le long des unités de chauffage (30) étant assurée par plusieurs dispositifs de support (33) de préforme (1) lesquels sont reliés entre eux pour former une chaîne de transport sans fin, la chaîne de transport sans fin étant entraînée en circulation continue à l'intérieur du dispositif de chauffage (H) selon une direction de transport le long d'un circuit pour transporter les préformes (1) maintenues par les dispositifs de support (33) en vue de leur conditionnement thermique le long des unités de chauffage (30), chaque dispositif de support (33) étant muni d'un moyen de maintien (55) pour préformes (1) qui maintient la préforme (1) et est agencé dans le dispositif de support (33) de façon à pouvoir tourner pour obtenir une rotation de la préforme (1) autour de son axe longitudinal, des préformes (1) étant, dans une zone d'introduction du circuit, introduites dans les dispositifs de support (33) et maintenues par leurs moyens de maintien (55) et des préformes (1) thermiquement conditionnées étant, dans une zone de sortie du circuit, retirées des moyens de maintien (55) des dispositifs de support (33) de sorte que les dispositifs de transport (33) circulent sans préformes entre la zone de sortie et la zone d'introduction et transportent des préformes entre la zone d'introduction et la zone de sortie, un premier moyen de guidage forcé (80) actionnant le moyen de maintien (55) par complémentarité de forme ou par transmission de force pour agir sur sa position de rotation pendant la circulation avec des préformes sur une première section partielle du circuit et un deuxième moyen de guidage forcé (80) actionnant le moyen de maintien (55) par complémentarité de forme ou par transmission de force pour agir sur sa position de rotation pendant la circulation sur une deuxième section partielle du circuit, le premier moyen de guidage forcé (80) entraînant les moyens de maintien (55) en une rotation telle que les préformes (1) guidées le long des unités de chauffage (30) soient uniformément tempérées sur leur périphérie, et le deuxième moyen de guidage forcé (80) agissant sur la position de rotation des moyens de maintien (55) de façon à ce que les préformes (1) guidées le long des unités de chauffage (30) soient non uniformément tempérées sur leur périphérie (Preferential Heating), **caractérisé en ce que** les premiers et deuxièmes moyens de guidage forcé (80, 90) assurent le guidage forcé de la position de rotation des moyens de maintien (55) au moins aussi longtemps que les moyens de maintien (55) circulent en transportant des préformes et de préférence pendant toute la durée du parcours le long du circuit.

2. Procédé de chauffage selon la revendication 1, **caractérisé en ce que** dans une zone de chevauchement entre le premier et le deuxième moyen de guidage forcé (80, 90) les deux moyens de guidage forcé agissent sur la position de rotation des moyens de maintien (55).

3. Procédé de chauffage selon la revendication 1 ou 2, **caractérisé en ce que** les deuxièmes moyens de guidage forcé (90) guident un entraîneur (70) du moyen de maintien (55) le long d'une came de guidage (92) et/ou **en ce que** les premiers moyens de guidage forcé (80) s'engrènent avec le moyen de maintien (55) à l'aide d'un corps d'entraînement en rotation (68).

4. Procédé de chauffage selon la revendication 3, **caractérisé en ce que** les premiers moyens de guidage forcé sont réalisés sous forme de plusieurs crémaillères (80) agencées l'une derrière l'autre dans le sens de transport et qui s'engrènent avec les corps d'entraînement en rotation (68).

5. Dispositif de chauffage (H) pour le conditionnement thermique de préformes (1) par lequel des préformes (1) sont conduites selon une direction de transport en vue de leur conditionnement thermique, plusieurs unités de chauffage (30) stationnaires étant agencées dans le dispositif de chauffage (H) l'une derrière l'autre dans le sens du transport, le dispositif de chauffage (H) présentant plusieurs dispositifs de support (33) des préformes (1), lesquels dispositifs sont reliés entre eux pour former une chaîne de transport sans fin, la chaîne de transport sans fin pouvant être entraînée en circulation continue à l'intérieur du dispositif de chauffage (H) selon une direction de transport le long d'un circuit, les préformes (1) étant conduites le long des unités de chauffage (30) pendant cette circulation le long du circuit, chaque dispositif de support (33) présentant respectivement un moyen de maintien (55) pour une préforme (1) conçu pour maintenir la préforme (1) et agencé dans le dispositif de support (33) de façon à pouvoir tourner pour obtenir une rotation de la préforme (1) maintenue autour de son axe longitudinal, le dispositif de chauffage (H) présentant une zone d'introduction de préformes dans laquelle des préformes (1) peuvent être introduites dans les dispositifs de support (33) et dans laquelle les moyens de maintien (55) des dispositifs de support (33) peuvent recevoir des préformes, le dispositif de chauffage (H) présentant en outre une zone de sortie dans laquelle les préformes (1) thermiquement conditionnées peuvent être retirées des moyens de maintien (55) des dispositifs de support (33) de sorte que, pendant le fonctionnement du dispositif de chauffage (H), les dispositifs de transport (33) avec leurs moyens de maintien (55) circulent sans préformes entre la zone de sortie et la zone d'introduction et transportent des préformes entre la zone d'introduction et la zone de sortie, le dispositif de chauffage présentant des premiers et deuxièmes moyens de guidage forcé (80, 90) actionnant les moyens de maintien (55) par complémentarité de forme ou par transmission de force pour en définir la position de rotation, ces moyens de guidage forcé étant au moins agencés dans la partie du circuit dans laquelle les dispositifs de transport circulent en transportant des préformes, le premier moyen de guidage forcé (80) étant conçu pour entraîner les moyens de maintien (55) en une rotation uniforme autour de leur axe longitudinal de sorte que les préformes (1) guidées le long des unités de chauffage (30) soient uniformément tempérées sur leur périphérie, et le deuxième moyen de guidage forcé (90) étant conçu pour obtenir une position de rotation des moyens de maintien (55) telle que les préformes (1) guidées le long des unités de chauffage (30) soient non uniformément tempérées sur leur périphérie (Preferential Heating), **caractérisé en ce que** les premiers et deuxièmes moyens de guidage forcé (80, 90) présentent un agencement et une extension telles que la position de rotation des moyens de maintien (55) dans le sens du transport soit imposée par les deux moyen de guidage forcé au moins de la zone d'introduction jusqu'à la zone de sortie et, de préférence, le long de la totalité du circuit.

6. Dispositif de chauffage (H) selon la revendication 5, **caractérisé en ce que** dans une zone de chevauchement entre le premier (80) et le deuxième moyen de guidage forcé (90) les deux moyens de guidage forcé s'engrènent avec le moyen de maintien (55).

7. Dispositif de chauffage (H) selon la revendication 5 ou 6, **caractérisé en ce que** les deuxièmes moyens de guidage forcé (90) présentent une came de guidage (92) le long de laquelle est guidé un entraîneur (70) et/ou **en ce que** les premiers moyens de guidage forcé (80) présentent des moyens d'engrenage, lesquels sont réalisés et agencés pour s'engrener avec le moyen de maintien (55) à l'aide d'un corps d'entraînement en rotation (68).

8. Dispositif de chauffage (H) selon la revendication 7, **caractérisé en ce que** les premiers moyens de guidage forcé sont réalisés sous forme de plusieurs crémaillères (80) agencées l'une derrière l'autre dans le sens du transport.

9. Dispositif de chauffage (H) selon la revendication 8, les crémaillères (80) présentant une extension longitudinale dans le sens du transport **caractérisé en ce que** les deux côtés longitudinaux des crémaillères (80) sont dotées d'un profil denté (82) pour l'engrènement avec une roue dentée (68), les deux côtés longitudinaux étant interchangeables par rotation de 180° de la crémaillère (80).

10. Dispositif de chauffage (H) selon la revendication 8 ou 9, **caractérisé en ce que** les dents du profil denté (82) des crémaillères (80) présentent des flancs identiques des deux côtés.

11. Dispositif de chauffage (H) selon l'une des revendications 8 à 10, **caractérisé en ce que** la crémaillère (80) est réalisée en une matière plastique.

12. Dispositif de chauffage (H) selon l'une des revendications 8 à 11, **caractérisé en ce que** les deux sections d'extrémité frontales des crémaillères (80) présentent respectivement un agencement géométrique de trous avec respectivement au moins une et de préférence plusieurs rangées longitudinales de trous, les trous de la rangée traversant la crémaillères (80) de sa face supérieure à sa face inférieure, l'espacement des trous d'une même rangée correspondant à l'espacement des dents du profil denté ou à un multiple de cet espacement, l'agencement géométrique des trous étant tel qu'en cas de superposition d'une seule section d'extrémité d'une première crémaillère (80) et d'une seule section d'extrémité d'une deuxième crémaillère (80) et une disposition alignée des agencements géométriques de trous les dents des profils dentés des sections de crémaillère superposées qui se chevauchent sont alignés.

13. Dispositif de chauffage (H) selon l'une des revendications 8 à 12, **caractérisé en ce que** les crémaillères (80) présentent des évidements (86) qui s'étendent de la face supérieure à la face inférieure et, de part et d'autre des évidements (86), des fentes (88) conformées et agencées de façon à former ensemble un assemblage en parallélogramme solide.

14. Dispositif de chauffage (H) selon l'une des revendications 8 à 13, **caractérisé en ce que** les crémaillères (80) présentent une symétrie de rotation en cas de rotation de 180° autour d'un axe vertical des passant par leur centre et/ou de rotation de 180° autour d'un axe longitudinal des crémaillères passant par ce centre.

15. Machine à fabriquer des récipients (B) pour la transformation de préformes (1) en récipient, **caractérisée par** un dispositif de chauffage (H) selon l'une des revendications 5 à 14.
